# EUROPÄISCHE PATENTSCHRIFT

(11) **EP 3 932 158 B1**
(45) Veröffentlichungstag und Bekanntmachung des Hinweises auf die Patenterteilung: **10.09.2025**
(21) Anmeldenummer: 21176826.2
(22) Anmeldetag: 31.05.2021
(51) Int. Cl.: A01B 59/042, A01B 59/06, A01B 71/02

(54) **TRAKTOR UND VERFAHREN ZUM BETREIBEN EINES TRAKTORS**
TRACTOR AND METHOD FOR OPERATING SAME
TRACTEUR ET PROCÉDÉ DE FONCTIONNEMENT D'UN TRACTEUR

(30) Priorität: 03.07.2020 DE 102020117674
(43) Veröffentlichungstag der Anmeldung: 05.01.2022
(73) Patentinhaber: CLAAS Tractor S.A.S., 78141 Vélizy-Villacoublay Cedex (FR)
(72) Erfinder: Wieckhorst, Jan Carsten, 29525 Uelzen Orsteil Hanstedt 2 (DE); Ehlert, Christian, 33719 Bielefeld (DE); Birkmann, Christian, 33775 Versmold (DE)
(74) Vertreter: CLAAS Gruppe

(56) Entgegenhaltungen:
- EP-A1- 1 358 784
- EP-A1- 2 016 818
- EP-A1- 2 583 543
- EP-B1- 3 146 822
- US-A1- 2016 039 480

## Beschreibung

Die vorliegende Erfindung betrifft einen Traktor gemäß dem Oberbegriff des Anspruches 1. Weiterhin betrifft die Erfindung ein Verfahren zum Betreiben eines Traktors gemäß dem Anspruch 20.

Bei der Bearbeitung des Bodens von landwirtschaftlichen Nutzflächen kommt in der Regel ein Traktor ( siehe EP 2 583 543) als Zugfahrzeug zum Einsatz, an welchen ein Anbaugerät adaptiert ist.

Der Traktor ist mit einem Hubwerk ausgeführt, welches einem Oberlenker und Unterlenker aufweist. Das Anbaugerät ist an das Hubwerk adaptiert und wird von diesem von einer Transportposition und in eine Arbeitsposition überführt und umgekehrt. In der Arbeitsposition des Anbaugerätes werden von dem Anbaugerät Kräfte auf den Boden übertragen. Aus der EP 3 243 368 A1 ist ein Traktor der eingangs genannten Art bekannt. Der Traktor umfasst ein den Betrieb des Traktors optimierendes Fahrerassistenzsystem, welches über eine Recheneinheit, eine Speichereinheit und zumindest eine Anzeigeeinheit als Eingabeschnittstelle verfügt, wobei die Recheneinheit von maschineninternen Sensorsystemen generierte Informationen, externe Informationen und in der Speichereinheit hinterlegbare Informationen verarbeitet. Der Traktor und/oder das Anbaugerät umfassen eine Steuervorrichtung zur Steuerung und Regelung des Traktors sowie des Anbaugerätes. Das aus der EP 3 243 368 A1 bekannte Fahrerassistenzsystem ist dabei so strukturiert, dass es einen Zugmaschinenautomaten und einen Anbaugeräteautomaten bildet, wobei der Zugmaschinenautomat und der Anbaugeräteautomat eine Optimierung der Arbeitsweise des Traktors und/oder des zumindest einen Anbaugerätes bewirken. Dazu werden für die Arbeitsweise des Anbaugerätes spezifische Optimierungsstrategien herangezogen, wie Power Hop zur Vermeidung eines belastungsabhängigen Aufschaukelns des Systems aus Traktor und Anbaugerät, Stoppelbearbeitung, Bodenlockerung, Ebenheit, Durchmischung, Saatbettbereitung, Krümelung und Rückverfestigung.

Bei Zugarbeiten auf Böden landwirtschaftlicher Nutzflächen ist das Verhältnis aus horizontaler Zugkraft des Fahrwerks bzw. der Bodeneingriffsmittel (Triebkraft) und der vertikalen Kraft auf das Fahrwerk bzw. der Bodeneingriffsmittel (Radlast) in einem bestimmten Verhältnis einzustellen, damit sich ein möglichst hoher Traktionswirkungsgrad einstellt. Die horizontale Fahrwerkskraft bzw. Triebkraft ergibt sich dabei aus dem Zugkraftbedarf des Arbeitsgeräts bei gegebenen Arbeitsparametern wie Arbeitstiefe, Arbeitsgeschwindigkeit und den jeweilig herrschenden Arbeitsbedingungen. Die vertikale Fahrwerkskraft bzw. Radlast kann innerhalb von durch die Bauart des Traktors bedingten Grenzen, wie das Leergewicht des Traktors, die zulässige Achslast, das zulässige Traktorgesamtgewicht, durch eine Ballastierung des Traktors angepasst werden, um das Verhältnis aus vertikaler Fahrwerkskraft und horizontaler Fahrwerkskraft in einer Weise einzustellen, welche zu einem verbesserten Traktionswirkungsgrad führt. Bei heutigen Traktoren verfügt das Hubwerk über eine Positionsregelung (Lageregelung), eine Zugkraftregelung und eine Mischregelung als gewichtete Kombination aus Positions- und Zugkraftregelung. Zudem kann die Zugkraftregelung durch eine Schlupfregelung überlagert werden. Den jeweiligen Hubwerkregelungen liegt dabei die horizontale Fahrwerkskraft bzw. Triebkraft als Regelgröße zugrunde. Im Rahmen dieser Regelungen wird von einem Bediener ein einzuhaltender Sollwert vorgegeben, auf Basis dessen die Regelung des Hubwerkes erfolgt. Der Bediener muss dabei selbst bewerten mit welcher Einstellung der beste Kompromiss aus Leistung, Effizienz und Arbeitsqualität erreicht wird. Neben dieser Problematik der Selbsteinschätzung durch den Bediener treten oftmals Änderungen der Einsatzbedingungen während eines Bearbeitungsvorganges auf, die vom Bediener nicht erkannt und somit auch nicht berücksichtigt werden.

Somit liegt der Erfindung die Aufgabe zugrunde, den bekannten Traktor derart auszugestalten und weiterzubilden, dass eine verbesserte Optimierung des Arbeitsbetriebes des Traktors insbesondere vor dem Hintergrund auftretender Einsatzbedingungen während eines Bearbeitungsvorganges ermöglicht wird.

Diese Aufgabe wird erfindungsgemäß durch einen Traktor gemäß dem Oberbegriff des Anspruches 1 in Verbindung mit dessen kennzeichnenden Merkmalen gelöst.

Gemäß dem Anspruch 1 wird ein Traktor mit zumindest einem Hubwerk, das einen Oberlenker sowie Unterlenker und diesen zugeordnete Aktoren aufweist, und zumindest einem an das Hubwerk adaptierten Anbaugerät, umfassend ein den Betrieb zumindest des Traktors optimierendes Fahrerassistenzsystem, welches über eine Recheneinheit, eine Speichereinheit und zumindest eine Eingabeschnittstelle verfügt, vorgeschlagen, wobei die Recheneinheit von maschineninternen Sensorsystemen generierte Informationen, externe Informationen und in der Speichereinheit hinterlegbare Informationen verarbeitet und wobei der Traktor und/oder das zumindest eine Anbaugerät eine Steuervorrichtung zur Steuerung und Regelung des Traktors und/oder des Anbaugerätes umfassen, wobei das Fahrerassistenzsystem einen Hubwerkautomaten umfasst, wobei der Hubwerkautomat eingerichtet ist, kennlinienbasiert zu arbeiten, und wobei der Hubwerkautomat für eine optimierte Einstellung von wenigstens einem Arbeitsparameter des Traktors in Abhängigkeit von in der Speichereinheit hinterlegten auswählbaren Regelstrategien und/oder Optimierungszielgrößen eingerichtet ist. Insbesondere ist der Hubwerkautomat für eine optimierte Einstellung von wenigstens einem Einstellparameter des zumindest einen Hubwerkes als einem Arbeitsparameter des Traktors in Abhängigkeit von in der Speichereinheit hinterlegten auswählbaren Regelstrategien und/oder Optimierungszielgrößen eingerichtet. Bei adaptierten bzw. angebauten Arbeitsgeräten wird ein Teil des Anbaugerätegewichts und/oder der an Bodenbearbeitungswerkzeugen des Anbaugerätes wirkenden Prozesskräfte auf den Traktor übertragen. Der Hubwerkautomat ermöglicht eine optimierte Einstellung durch eine Regelung der Arbeitsparameter des Traktors, die Einfluss auf die vertikale Fahrwerkskraft haben, insbesondere von wenigstens einem Einstellparameter des zumindest einen Hubwerkes als einem Arbeitsparameter des Traktors. Somit wird eine gegenüber dem Stand der Technik verbesserte und beschleunigte Einstelloptimierung erreicht, durch welche Änderungen der Einsatzbedingungen während eines Bearbeitungsvorganges berücksichtigt werden.

In der Regel weisen Traktoren ein Fronthubwerk und ein Heckhubwerk auf, welche von dem Hubwerkautomaten gemeinsam oder unabhängig voneinander einstellbar sind.

Insbesondere kann die Optimierung des wenigstens einen Arbeitsparameters durch den Hubwerkautomaten die Berücksichtigung der Auswirkung auf das an das Hubwerk adaptierte Anbaugerät sowie die wechselseitige Kraftübertragung zwischen dem Traktor und dem Anbaugerät umfassen. Dabei sind die Art bzw. der Typ des Anbaugerätes von großer Bedeutung. So haben als Bodenbearbeitungsgeräte ausgeführte Anbaugeräte, wie beispielsweise ein Pflug oder ein Grubber, einen anderen Einfluss auf den Traktionswirkungsgrad als beispielsweise Anbaugeräte, wie Düngerstreuer oder Aufbausämaschinen, die nicht unmittelbar mit dem Boden in Eingriff stehen beziehungsweise gegenüber Bodenbearbeitungsgeräten nur geringe Horizontalkräfte hervorrufen.

Gemäß einer bevorzugten Ausgestaltung der Erfindung kann der wenigstens eine Arbeitsparameter zumindest eine vom Anbaugerät auf den Traktor übertragene resultierende Kraft oder Kraftkomponente umfassen, welche in horizontaler und/oder vertikaler Richtung wirkt.

Bevorzugt kann der wenigstens eine Arbeitsparameter zumindest ein Hubwerkeinstellparameter aus einer Gruppe umfassend Hubwerkposition des Oberlenkers und/oder der Unterlenker, Hubwerkkraft der Unterlenker, Länge des Oberlenkers und/oder der Unterlenker, Oberlenkerkraft, Länge einer Hubstrebe, Hubwerkgeometrie sein. Neben den am Hubwerk auftretenden Kräften als Hubwerkeinstellparameter, hat die jeweilige Hubwerkgeometrie, die sich aus der Hubwerkposition sowie Längeneinstellungen von Oberlenker, Unterlenkern sowie Hubstrebe ergibt, als Hubwerkeinstellparameter Einfluss auf die Optimierung, insbesondere da sich die Kräfte und die Hubwerkgeometrie gegenseitig beeinflussen.

Dabei kann die auswählbare Regelstrategie zumindest eine Strategie "Effizienz", "Leistung", "Kosten", "Qualität", "Ertrag" oder eine Kombination der Strategien "Effizienz", "Leistung", "Kosten", "Qualität" und/oder "Ertrag" umfassen. Die Regelstrategien stellen Ansätze auf Basis einer ganzheitlichen Betrachtung von Traktor und Anbaugerät bei der Optimierung dar. Dabei werden gemäß der Regelstrategie "Effizienz" der Flächenverbrauch (Liter / ha) und/oder die für die Bearbeitung erforderlichen Betriebsstunden optimiert. Der Regelstrategie "Leistung" liegt die Optimierung der Flächenleistung (ha / h) zugrunde. Mit der Regelstrategie "Kosten" sollen die Kosten pro Fläche (€ / ha) optimiert werden. Die Regelstrategie "Qualität" bewirkt eine Optimierung der Arbeitsparameter von Traktor und Anbaugerät zur Erzielung einer gleichmäßigen und möglichst hohen Arbeitsqualität. Die Regelstrategie "Ertrag" stellt die Ertragsoptimierung in den Vordergrund. Darüber hinaus ist es möglich, einen gewichten Mittelwert aus allen oder Teilen der vorgenannten Strategien über den wenigstens einen Arbeitsparameter vorzugeben.

Die Optimierungszielgrößen können zumindest eine Zielgröße "Flächenleistung", "Flächenverbrauch", "Ertrag pro Fläche", "Kosten pro Fläche" und/oder "Arbeitsqualität" umfassen. Die auswählbaren Optimierungszielgrößen bieten die Möglichkeit, spezifische Einzelaspekte, insbesondere in unterschiedlicher Kombination miteinander, der Optimierung durch den Hubwerkautomaten zugrunde zu legen. Die Optimierungszielgröße "Kosten pro Fläche" kann beispielsweise vordergründig anfallende Personalkosten, Kraftstoffkosten, Verschleißkosten, Betriebsstunden und dergleichen mehr berücksichtigen. Die Optimierungszielgröße "Flächenleistung" kann beispielsweise vordergründig auf die Steigerung der bearbeiteten Fläche und/oder der verarbeiteten Masse von Einsatzstoffen gerichtet sein. Die Optimierungszielgröße "Arbeitsqualität" stellt beispielsweise die Einmischung von Ernterückständen in den Boden, die Krümelung, die Rückverfestigung, die Futterqualität, die Bodenlockerung, die Reduzierung von Bodenunebenheiten und dergleichen mehr bei der Optimierung in den Vordergrund.

Durch die Auswahl einer Regelstrategie und/oder einer oder mehrerer Optimierungszielgrößen wird das Gesamtsystem aus Traktor und Anbaugerät durch Verstellen der Hubwerkseinstellparameter mittels des Hubwerkautomaten ganzheitlich optimiert. Ganzheitlich optimiert heißt dabei, dass im Unterschied zum Stand der Technik sich die Regelung der Hubwerkeinstellung nicht alleinig auf eine Positionsregelung, eine Zugkraftregelung oder eine Mischregelung aus Positions- und Zugkraftregelung stützt, sondern darüber hinaus Einflüsse berücksichtigt, die beispielsweise aus auftretenden Streuungen von Wirkungsgraden und oder Betriebsverhalten des Antriebsstranges einschließlich des Fahrwerks des Traktors resultieren. Vorteilhafterweise werden hierdurch auch die in der Praxis auftretenden Streuungen von Wirkungsgraden bei verschiedenen Einsatzbedingungen berücksichtigt.

Vorzugsweise kann die Steuervorrichtung des Traktors zusammen mit dem Fahrerassistenzsystem den Hubwerkautomaten bilden, indem die Recheneinheit dazu eingerichtet ist, zur Umsetzung der jeweils ausgewählten Regelstrategie und/oder Optimierungszielgröße Parameter autonom zu ermitteln und der Steuervorrichtung des Traktors vorzugeben, die den wenigstens einen einzustellenden Arbeitsparameter beeinflussen. Der Hubwerkautomat umfasst weiter das zumindest eine Hubwerk und seine Aktoren zur Einstellung von Oberlenker und Unterlenker durch die Einstellung und Anpassung der Hubwerkeinstellparameter.

Insbesondere können die zur optimierten Ansteuerung des zumindest einen Hubwerkes zu berücksichtigenden Parameter Arbeitsparameter des Traktor, Arbeitsparameter eines Antriebsstranges des Traktors, Arbeitsparameter des Anbaugerätes und/oder aus Umgebungsbedingungen resultierende Umweltparameter sein. Bevorzugt finden zumindest die Arbeitsparameter des Antriebsstranges und des Anbaugerätes Eingang in die optimierte Ansteuerung, da diese zumeist unmittelbar an dem Traktor und dessen Antriebsstrang bzw. an dem Anbaugerät bestimmt werden können. Weiterhin können Umweltparameter von dem Hubwerkautomaten erfasst, bestimmt oder empfangen werden, welche Rückschlüsse auf aktuell vorherrschende Bodenkonditionen des zu bearbeitenden Bodens zulassen, auf dem der Traktor und das adaptierte Anbaugerät bewegt werden.

Vorteilhaft können zumindest an dem Traktor Sensoreinrichtungen angeordnet sein, die zur Bestimmung von Arbeitsparametern und/oder Umweltparametern eingerichtet sind. Zudem kann an dem Anbaugerät zumindest eine Sensoreinrichtung angeordnet sein, welche zumindest der Bestimmung von spezifischen Arbeitsparametern des Anbaugerätes dienen. Hierzu kann das Anbaugerät über drahtlose oder drahtgebundene Kommunikationsmittel mit dem Traktor verbunden sein, um Daten der zumindest einen Sensoreinrichtung des Anbaugerätes an das Fahrerassistenzsystem zur Auswertung und Berücksichtigung bei der Optimierung durch den Hubwerkautomaten zu übertragen. Dabei kann es sich bei einer der Sensoreinrichtungen beispielsweise um einen Drehzahlsensor, einen Drehmomentsensor, einen Drucksensor oder einen Kraftsensor handeln. Zudem kann es sich bei einer der Sensoreinrichtungen um einen Positionssensor zur Bestimmung der Lage von Komponenten des Hubwerkes und/oder des Anbaugerätes und/oder um einen Arbeitstiefensensor handeln. Die Sensoreinrichtungen zur Bestimmung von Arbeitsparametern des Traktors sind dem Antriebsstrang bzw. dessen Komponenten, wie Nebenabtrieb oder Nebenaggregaten, unmittelbar zugeordnet. Das zumindest eine Hubwerk des Traktors verfügt über Sensoreinrichtungen, mit welchen Kräfte und Bewegungen von Oberlenker und Unterlenkern bestimmt werden können. Zudem kann dem zumindest einen Hubwerk ein Positionssensor zur Bestimmung der Arbeitshöhe zugeordnet sein. Weiterhin können dem Traktor und/oder dem Anbaugerät zusätzliche Sensoreinrichtungen zugeordnet sein, die zur Bestimmung von Betriebsinformationen oder Arbeitsparametern des Traktors und/oder des Anbaugerätes sowie zur Bestimmung und/oder zum Empfang von Umweltparametern eingerichtet sind. Dabei kann es sich bei einer der Sensoreinrichtungen beispielsweise um einen Geschwindigkeitssensor, einen Neigungssensor, einen optischen Sensor und/oder einen Positionsortungssensor handeln. Mittels des Neigungssensors lässt sich beispielsweise eine Neigung des Traktors und/oder des Anbaugerätes in Längs- und/oder Querrichtung detektieren. Dadurch kann auf die in der jeweiligen Betriebssituation vorherrschende Topologie geschlossen werden. Diese Betriebsinformation kann durch von dem Positionsortungssensor bereitgestellte Daten ergänzt und/oder verifiziert werden.

Gemäß einer bevorzugten Weiterbildung kann das Hubwerk zumindest einen als Hubwerkzylinder ausgeführten Aktor mit einem dem Aktor zugeordneten Kraftmesssystem umfassen.

Weiterhin kann das Hubwerk zumindest eine längenveränderliche Hubstrebe mit einem der Hubstrebe zugeordneten Kraftmesssystem umfassen.

Weiter bevorzugt kann das Hubwerk ein Kraftmesssystem umfassen, welches zur Erfassung von Kräften, die an endseitig der Unterlenker angeordneten Aufnahmeelementen für das Anbaugerät eingeleitet werden, eingerichtet ist.

Die resultierenden vom Anbaugerät auf den Traktor übertragenen bzw. wirkenden Hubwerkkräfte insbesondere in horizontaler und/oder vertikaler Richtung gehören zur Gruppe der Hubwerkeinstellparameter. Die Kräfte können insbesondere aus dem Druck der Hubwerkzylinder und/oder des Drucks im hydraulischen Oberlenker, der Oberlenkerlängskraft, und/oder den Signalen von Kraftmessbolzen am Hubwerk, den Schnittkräften zwischen Traktor und Anbaugerät, den Längskräften der Hubstreben und der aktuellen Hubwerkgeometrie ermittelt werden. Die Hubwerkposition der Unterlenker sowie die Länge und Position des Oberlenkers sind neben den Kräften weitere Hubwerkeinstellparameter. Vertikale und horizontale Schnittkräften zwischen Traktor und Anbaugerät können im Koppelpunkt zwischen Traktor und Anbaugerät und/oder auf dem Anbaugerät gemessen werden. Die aktuelle Hubwerkgeometrie, d.h. unter anderem Position des Oberlenkers und der Unterlenker, Position des Hubarms, die Länge der Hubstreben, eine gewählte Lochposition in den Hubstreben, bildet weitere Hubwerkeinstellparameter.

Insbesondere kann das Fahrerassistenzsystem zum Empfang von externen Informationen eingerichtet sein, um Arbeitsparameter und/oder Umweltparameter zu bestimmen. Externe Informationen können beispielsweise von anderen Arbeitsmaschinen, einem externen Farm Management System oder allgemein aus dem Internet bezogen werden.

Weiterhin kann in der Speichereinheit ein funktionales Modell des Traktors und des Anbaugerätes hinterlegt sein, welches zumindest einen Teil der funktionalen Zusammenhänge des Traktors und des Anbaugerätes abbildet. So können mittels des funktionalen Modells die verschiedenen Betriebssituationen des Traktors und des adaptierten Anbaugerätes modelliert werden, um in der jeweiligen Betriebssituation und unter Berücksichtigung der ausgewählten Regelstrategie und/oder Optimierungszielgröße(n) eine optimierte Ansteuerung der Aktoren des zumindest einen Hubwerkes durch den Hubwerkautomaten zu erreichen. Denkbar sind alternativ auch reine Black-Box-Modelle, die beispielsweise auf Künstlicher Intelligenz (Kl) oder neuronalen Netzwerken basieren, oder Mischformen, um zumindest einen Teil der funktionalen Zusammenhänge abzubilden.

Dabei kann zur Abbildung der funktionalen Zusammenhänge des Traktors dem zumindest einen Hubwerkeinstellparameter mindestens ein n-dimensionales Kennfeld zugeordnet sein, wobei der jeweilige Hubwerkeinstellparameter als Ausgangsgröße des mindestens einen n-dimensionalen Kennfeldes definiert ist. Mittels des mindestens einen n-dimensionalen Kennfeldes lassen sich auch komplexe funktionale Zusammenhänge des Gesamtsystems aus Traktor, Anbaugerät und Umgebung mit geringem rechnerischen Aufwand abbilden. Kennlinien des n-dimensionalen Kennfeldes können adaptiv an die jeweilige Situation angepasst werden, um Zusammenhänge beim Betrieb von Traktor, Anbaugerät und Umgebungsbedingungen gesamtheitlich zu berücksichtigten, welche Einfluss auf die Regelstrategien bzw. auf die Optimierungszielgröße(n) und damit auf die jeweils erforderliche Einstellung des zumindest einen Hubwerkeinstellparameters haben. Die Anpassung der Kennlinien des n-dimensionalen Kennfeldes erfolgt dabei durch den Hubwerkautomaten.

Hierbei können zumindest ein oder mehrere Arbeitsparameter des Traktors, des Anbaugerätes und/oder aus den Umgebungsbedingungen resultierende Umweltparameter die Eingangsgrößen des mindestens einen n-dimensionalen Kennfeldes bilden. So können die Arbeitsparameter wie die Hubwerkposition und die sich daraus ergebende Arbeitstiefe, Signale von als Zugkraftmessbolzen ausgeführten Sensoreinrichtungen des Hubwerkes, Traktionsverstärkereinstellungen sowie Kräfte in der Anbaugeräteschnittstelle als Eingangsgrößen des n-dimensionalen Kennfeldes bilden. Die Arbeitstiefe kann alternativ oder zusätzlich durch zumindest eine am Anbaugerät vorgesehene Sensoreinrichtung bestimmbar sein. Des Weiteren können die Arbeitsparameter Ausgangsleistung des zumindest einen Antriebsmotors, Motordrehzahl, Getriebeübersetzung, Ausgangsleistung des Getriebes, Getriebeauslastung, Antriebsleistung des zumindest einen Nebenaggregates und/oder des zumindest einen Nebenabtriebs, Schlupf zwischen Bodeneingriffsmitteln des Traktors und dem Boden, Triebkraftverhalten, Leistungsfluss im Nebenabtriebsstrang und/oder Leistungsfluss im Hydraulikantriebsstrang und/oder einem elektrischen Antriebsstrang als Eingangsgrößen vorgesehen sein. Externe Informationen als Eingangsgrößen können das Wetter, Bodenart, Bodentyp, Bodenzustand oder Bodenfeuchte sein. Diese Informationen können aus externen Quellen bezogen werden und/oder manuell durch den Bediener über eine Eingabeschnittstelle des Fahrerassistenzsystems vorgegeben werden. Des Weiteren können Reifengröße und Reifentyp an den Achsen des Traktors, das Leergewicht des Traktors, die Ballastierung des Traktors, die Traktorgeometrie Eingangsgrößen des mindestens n-dimensionalen Kennfeldes bilden. Berechnete oder gemessene Arbeitsparameter, wie Traktionskräfte, Radkräfte und Radmomente sowie Achslasten an den Achsen des Traktors können gleichfalls Eingangsgrößen des mindestens n-dimensionalen Kennfeldes bilden.

Weiterhin können Arbeitsparameter des Anbaugerätes, wie Anbaugerätetyp, Anbaugerätegewicht, Anbaugerätegeometrie, die Art der Anbaugeräteschnittstelle, d.h. angebaut oder aufgesattelt, die Arbeitsbreite des Anbaugerätes, am Anbaugerät eingestellte anbaugerätespezifische Arbeitsparameter, beispielsweise Vorderfurchenbreite, Zugpunkt, Auflagedruck, Arbeitstiefe und dergleichen mehr, Eingangsgrößen des mindestens n-dimensionalen Kennfeldes sein.

Die vorstehend aufgeführten Arbeitsparameter des Traktors und des Anbaugerätes sowie Umweltparameter können entweder direkt gemessen werden (absolut oder relativ), aus anderen Werten berechnet (absolut oder relativ) werden, in Kennfeldern hinterlegt sein oder werden über externe Quellen bezogen, z.B. mittels georeferenzierter Karten oder durch Abruf von cloudbasierten, d.h. auf externen Datenverarbeitungssystemen zur Verfügung gestellten, online-Informationen.

Gemäß einer bevorzugten Weiterbildung kann die Recheneinheit das mindestens eine n-dimensionale Kennfeld im laufenden Betrieb, insbesondere zyklisch, mit den Einsatzbedingungen des Traktors und des Anbaugerätes abgleichen, vorzugsweise, dass in der Speichereinheit mindestens ein n-dimensionales Initialkennfeld für den zumindest einen Hubwerkeinstellparameter hinterlegt ist, und dass bei der ersten Ermittlung des zumindest einen Hubwerkeinstellparameters die Recheneinheit die Ermittlung basierend auf dem Initialkennfeld vornimmt.

Dabei kann die Recheneinheit dazu eingerichtet sein, eine Anpassung der Ausprägung des Initialkennfeldes an bestehende Einsatzbedingungen durch die Verwendung bestimmter Arbeitsparameter zumindest des Traktors, insbesondere auch des daran adaptierten Anbaugerätes, oder durch das Anfahren von Stützstellen im Initialkennfeld durchzuführen. Zusätzlich können gemessene, empfangene oder auf sonstige Weise bestimmte Umweltparameter verwendet werden, um eine Anpassung der Ausprägung des Initialkennfeldes an bestehende Einsatzbedingungen vorzunehmen. Wenn im n-dimensionalen Raum des Initialkennfeldes gemessene Parameter fehlen oder nur in unzureichender Menge vorliegen, wobei diese im standardmäßigen Betrieb des Traktors nicht angefahren werden, können stattdessen Stützstellen angefahren werden. Ausgehend von dem Initialkennfeld kann durch das Einstellen von vordefinierten Betriebspunkten, welche Stützstellen in dem mindestens einen n-dimensionale Kennfeld darstellen, die Ausprägung des mindestens einen n-dimensionalen Kennfeldes an die aktuellen Einsatzbedingungen angepasst werden.

Im laufenden Betrieb des Traktors kann die genaue Ausprägung des mindestens einen n-dimensionalen Kennfelds durch Ermitteln zumindest eines der im n-dimensionalen Kennfeld aufgetragenen Parameter an die aktuellen Einsatzbedingungen angepasst werden. Im Arbeitsbetrieb des Traktors mit daran adaptierten Anbaugerät, d.h. bei Durchführung einer Feldbearbeitung, können die Einsatzbedingungen starken Schwankungen unterliegen, die durch den Hubwerkautomaten zeitnah erfasst und berücksichtigt werden können, um den Betrieb gemäß der ausgewählten Regelstrategie und/oder der ausgewählten Optimierungszielgröße(n) zu optimieren. Zeitnah heißt, dass der Hubwerkautomat innerhalb eines von den Betriebsgrößen und Reaktionszeiten der Aktoren des zumindest einen Hubwerkes abhängigen Zeitintervalls auf Änderungen reagieren kann, um eine Veränderung zumindest eines Hubwerkeinstellparameters zu bewirken.

Gemäß einer vorteilhaften Ausführung kann das Fahrerassistenzsystem auf einem Daten-Cloudservice basierend ausgeführt sein. Dabei werden von den Sensoreinrichtungen des Traktors und/oder dem Anbaugerät generierte Informationen sowie externe Informationen an den Cloudservice übertragen und dort mittels Algorithmen aufbereitet. Die aufbereiteten Daten werden als die zu übertragenden Daten, in Abhängigkeit von denen die Regelstrategie ausgewählt wird, dem Hubwerkautomaten zuleitet. Alternativ oder zusätzlich kann die externe Rechnereinheit Daten, insbesondere externe Informationen von Dienstanbietern, mittels eines Algorithmus aufbereiten und die aufbereiteten Daten als zu übertragende Daten, in Abhängigkeit von denen die Regelstrategie ausgewählt wird, an den Hubwerkautomaten übertragen.

Weiterhin wird die eingangs gestellte Aufgabe durch ein Verfahren zum Betreiben eines Traktors gemäß dem Oberbegriff des nebengeordneten Anspruches 20 mit den kennzeichnenden Merkmalen des Anspruches 20 gelöst.

Gemäß dem nebengeordneten Anspruch 20 wird ein Verfahren zum Betreiben eines Traktors mit zumindest einem Hubwerk, das einen Oberlenker sowie Unterlenker und diesen zugeordnete Aktoren aufweist, und zumindest einem an das Hubwerk adaptierten Anbaugerät, umfassend ein den Betrieb zumindest des Traktors optimierendes Fahrerassistenzsystem, welches über eine Recheneinheit, eine Speichereinheit und zumindest eine Eingabeschnittstelle verfügt, wobei durch die Recheneinheit von maschineninternen Sensorsystemen generierte Informationen, externe Informationen und in der Speichereinheit hinterlegbare Informationen verarbeitet werden und wobei der Traktor und/oder das zumindest eine Anbaugerät durch eine Steuervorrichtung des Traktors und/oder des Anbaugerätes gesteuert und geregelt werden, wobei das Fahrerassistenzsystem einen kennlinienbasierend arbeitenden Hubwerkautomaten umfasst, wobei von dem Hubwerkautomaten eine optimierte Einstellung von wenigstens einem Arbeitsparameter des Traktors in Abhängigkeit von in der Speichereinheit hinterlegten auswählbaren Regelstrategien und/oder Optimierungszielgrößen durchgeführt wird. Insbesondere wird von dem Hubwerkautomaten eine optimierte Einstellung von wenigstens einem Einstellparameter des zumindest einen Hubwerkes als einem Arbeitsparameter des Traktors in Abhängigkeit von in der Speichereinheit hinterlegten auswählbaren Regelstrategien und/oder Optimierungszielgrößen durchgeführt.

Das Verfahren zum Betreiben des Traktors kann alle im Zusammenhang mit dem erfindungsgemäßen Traktor beschriebenen Merkmale gemäß den Ansprüchen 2 bis 19 einzeln oder in Kombination aufweisen.

Die vorliegende Erfindung wird nachstehend anhand eines in den Zeichnungen dargestellten Ausführungsbeispieles näher erläutert.

Es zeigen:
- Fig. 1: eine schematische Darstellung eines Traktors und eines an den Traktor adaptierten Anbaugerätes;
- Fig. 2: eine schematische Darstellung des Traktors gemäß Fig. 1 und eines Fahrerassistenzsystems;
- Fig. 3: eine Detailansicht des Fahrerassistenzsystems;
- Fig. 4: eine schematische Darstellung der Struktur eines Hubwerkautomaten;
- Fig. 5: exemplarisch ein n-dimensionales Kennfeld zur Ansteuerung eines Hubwerkes des Traktors;
- Fig. 6: exemplarisch ein Initialkennfeld, welches aufgrund einer Änderung eines Arbeitsparameters des Traktors adaptiert wird; und
- Fig. 7: eine schematische Seitenansicht des als Dreipunkt-Kraftheber ausgebildeten Hubwerkes des Traktors.

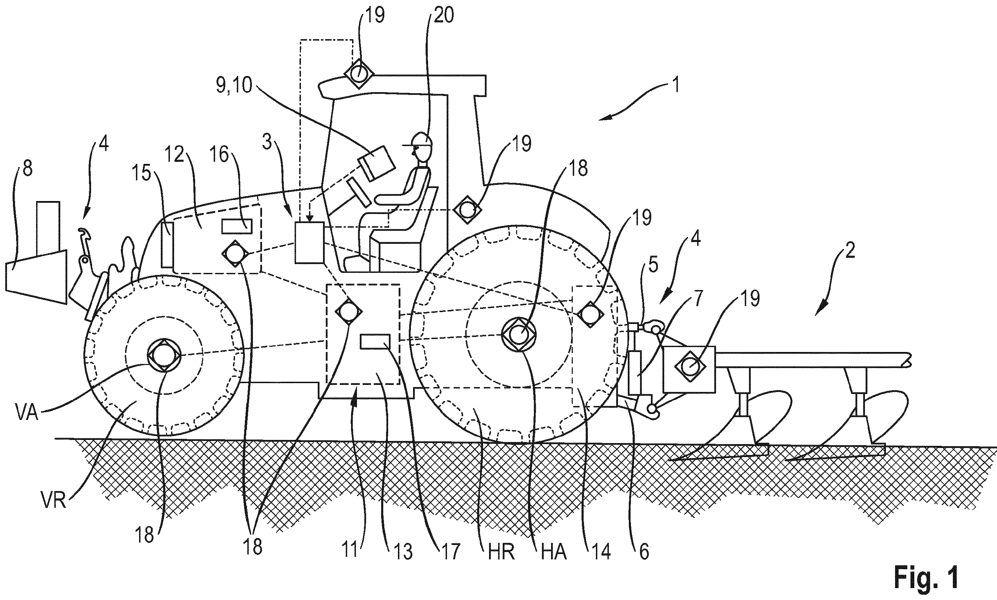

In Fig. 1 ist beispielhaft dargestellt, wie ein Traktor 1 mittels eines Anbaugerätes 2 zur Durchführung oder Unterstützung landwirtschaftlicher Arbeit, hier eines Anbaugeräts 2 in Form eines Pfluges, einen landwirtschaftlichen Arbeitsauftrag, hier eine Bodenbearbeitung, ausführt. Der Traktor 1 weist ein Fahrerassistenzsystem 3 auf, welches unter anderem zur Erfassung, Verarbeitung und Ausgabe von Daten, die einen landwirtschaftlichen Arbeitsauftrag betreffen, eingerichtet ist. Der Traktor 1 umfasst zumindest ein Hubwerk 4, welches einen Oberlenker 5 sowie Unterlenker 6 und diesen zugeordnete Aktoren 7, von denen nur einer lediglich beispielhaft angedeutet ist, aufweist. Das Anbaugerät 2 ist an das im Heckbereich des Traktors 1 angeordnete Hubwerk 4 adaptiert. Ein weiteres - teilweise dargestelltes - Hubwerk 4 kann frontseitig an dem Traktor 1 vorgesehen sein, welches im gezeigten Ausführungsbeispiels ein Ballastgewicht 8 zur Ballastierung aufnimmt. Das Hubwerk 4 kann insbesondere als Dreipunkt-Kraftheber ausgeführt sein. Dabei werden die Unterlenker 6 mit waagerechten, quer zur Fahrtrichtung orientierten Wellen bzw. Bolzen am Traktor 1 befestigt. An den freien Enden der Unterlenker 6 wird das Anbaugerät 2 angekuppelt. Die Gewichtskraft des Anbaugerätes 2 kann auf die Hinterachse HA übertragen werden, was die Traktion und somit die Zugleistung des Traktors 1 erhöht. Die Unterlenker 6 werden entweder direkt oder über ein Hebelsystem mit einem Hydraulikzylinder angehoben, welche allgemein als Aktoren 7 bezeichnet sind. Bei größeren Traktoren 1 kann jeweils ein Hydraulikzylinder pro Unterlenker 6 als Aktor 7 verwendet werden. Zur Verwendung kommen einfach oder doppeltwirkende Hydraulikzylinder. Bei einfach wirkenden Hydraulikzylindern als Aktoren 7 wird nur das Eigengewicht des Anbaugerätes 2 getragen. Doppeltwirkende Hydraulikzylinder als Aktoren 7 haben den Vorteil, dass neben dem Tragen auch Druck auf das Anbaugerät 2 ausgeübt werden kann.

Weiter oberhalb der Unterlenker 6 ist mittig der Oberlenker 5 angebracht, welcher die Verstellung der Neigung des Anbaugerätes 2 ermöglicht. Das nach hinten weisende Ende des Oberlenkers 5 ist der dritte Punkt an einer Dreipunkt-Aufhängung. Der Oberlenker 5 kann als Gewindespindel ausgeführt sein, die ohne Demontage verlängert oder verkürzt werden kann. Bei schwereren Traktoren 1 und Anbaugeräten 2 kann die Länge des Oberlenkers 5 über doppeltwirkende Hydraulikzylinder als Aktoren 7 auch unter Belastung verstellt werden.

Das Fahrerassistenzsystem 3 weist zumindest eine Eingabeschnittstelle 9 auf. Die Eingabeschnittstelle 9 kann wie hier als mindestens ein Eingabegerät 10 zur bedienerseitigen Dateneingabe ausgeführt sein und insbesondere mit einer Tastatur, einem Touchscreen und/oder einem Mikrofon gekoppelt sein. Das Eingabegerät 10 kann Teil des Traktors 1, des Anbaugerätes 2 und/oder eines Mobilgeräts sein.

Der Traktor 1 weist einen Antriebsstrang 11 auf. Der Antriebsstrang 11 umfasst zumindest einen Antriebsmotor 12, ein Getriebe 13, zumindest einen Nebenabtrieb 14 und zumindest ein Nebenaggregat 15. Der Antriebsmotor 12 ist hier und vorzugsweise als Verbrennungsmotor ausgeführt. Alternative Ausführungen des Antriebsmotors 12, beispielsweise als Elektromotor oder Hydraulikmotor, sind denkbar. Der Antriebsmotor 12 wird durch ein Motorsteuergerät 16 angesteuert. Das Getriebe 13 ist als Lastschaltgetriebe oder als stufenloses Getriebe ausgeführt. Das Getriebe 13 wird durch ein Getriebesteuergerät 17 angesteuert. Der zumindest eine Nebenabtrieb 14 ist als eine Zapfwelle ausgeführt, die dem Antrieb eines Anbaugerätes 2 dienen kann. Die Zapfwelle als Nebenabtrieb 14 kann sowohl im Frontbereich als auch im Heckbereich des Traktors 1 vorgesehen sein. Das zumindest eine Nebenaggregat 15 kann als Motorlüfter ausgebildet sein, welcher Teil einer Kühlvorrichtung des Antriebsmotors 12 ist. Weiterhin kann der Antriebsstrang 11 einen Hydraulikantriebsstrang und/oder einen elektrischen Antriebsstrang aufweisen. Dabei können beispielsweise eine Hydraulikpumpe und ein Hydraulikmotor oder ein Generator sowie ein Elektromotor weitere Nebenaggregate 15 des Antriebsstranges 11 bilden. Der Hydraulikantriebsstrang dient unter anderem zum Betreiben des zumindest einen Hubwerkes 4, mit welchem das Anbaugerät 2 an den Traktor 1 adaptiert wird.

Der Traktor 1 weist eine Vorderachse VA und einen Hinterachse HA auf, denen Bodeneingriffsmittel in Form von Rädern VR, HR und/oder wenigstens einem Raupenfahrwerk zugeordnet sind. Der Vorderachse VA und/oder der Hinterachse HA ist zumindest eine Sensoreinrichtung 18 zugeordnet, mit der sich eine an einer der Achsen VA, HA angreifende Fahrwerkskraft bestimmen lässt.

Dem Antriebsstrang 11 sind weitere Sensoreinrichtungen 18 zugeordnet, die zur Bestimmung von Arbeitsparametern des Antriebsstranges 11 respektive dessen unterschiedlichen Komponenten eingerichtet sind. Dabei kann es sich bei den weiteren Sensoreinrichtungen 18 beispielsweise um einen Drehzahlsensor, einen Drehmomentsensor, einen Drucksensor oder einen Kraftsensor handeln. Die Sensoreinrichtungen 18 zur Bestimmung von Arbeitsparametern des Antriebsstranges 11 sind dem Antriebsstrang 11 unmittelbar zugeordnet. Weiterhin können dem Traktor 1 und/oder dem Anbaugerät 2 zusätzliche Sensoreinrichtungen 19 zugeordnet sein, die zur Bestimmung von spezifischen Arbeitsparametern des Traktors 1 und/oder des Anbaugerätes 2 eingerichtet sind, die auch unabhängig vom Antriebsstrang 11 bestimmbar sind. Dabei kann es sich bei einer der zusätzlichen Sensoreinrichtungen 19 beispielsweise um einen Geschwindigkeitssensor, einen Neigungssensor, einen optischen Sensor und/oder einen Positionsortungssensor handeln. Des Weiteren kann zumindest eine der zusätzlichen Sensoreinrichtungen 19 zum Empfang und/oder zur Bestimmung von satellitenbasierten oder satellitengestützen Informationen, wie Geodaten oder Bewuchsdaten eingerichtet sein, bei denen es sich um externe Informationen 28 sowie in der Speichereinheit 26 hinterlegte Informationen 29 wie topographische Daten, Routenplanungsdaten und dergleichen mehr handeln kann. Darüber hinaus kann zumindest eine der zusätzlichen Sensoreinrichtungen 19 zur Bestimmung von Daten eingerichtet sein, die einen Rückschluss auf die Bodenbeschaffenheit des Bodens bzw. Untergrunds ermöglichen, auf dem der Traktor 1 mit dem Anbaugerät 2 bewegt wird.

Über das Eingabegerät 10 kann ein Bediener 20 des Traktors 1 weitere Parameter, insbesondere nicht automatisch erfassbare Betriebs-, Arbeits- und/oder Umgebungsparameter, beispielsweise Traktoren- und/oder Anbaugeräteart und/oder -typ, eingeben und dem Fahrerassistenzsystem 3 übermitteln.

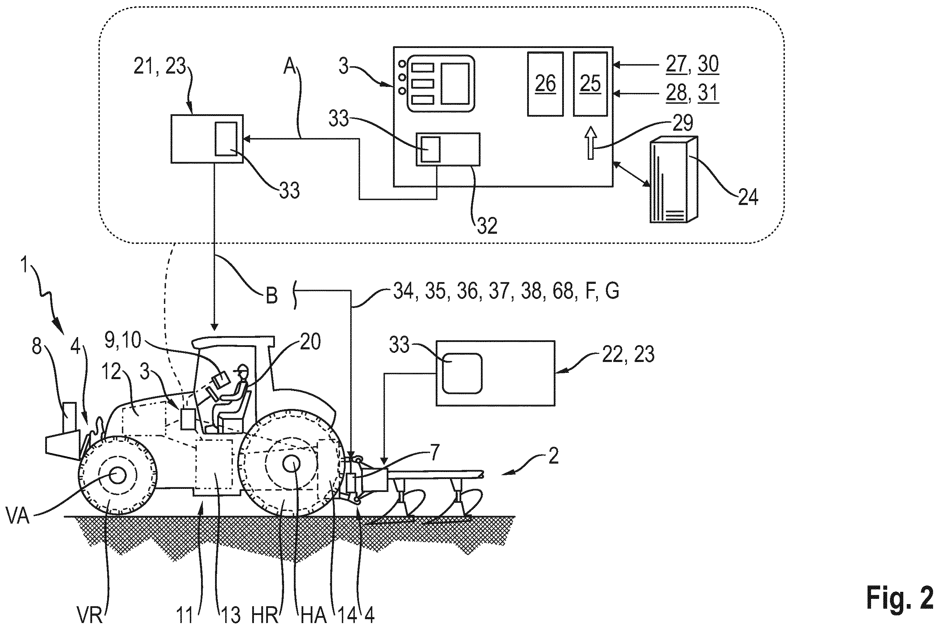

Fig. 2 zeigt eine schematische Darstellung des Traktors 1 gemäß Fig. 1 und des Fahrerassistenzsystems 3. Dem Traktor 1 und dem Anbaugerät 2 sind eine oder mehrere Steuervorrichtungen 21, 22 zur Steuerung und Regelung des Traktors 1 und/oder des jeweiligen Anbaugerätes 2 zugeordnet. Es liegt im Rahmen der Erfindung, dass dem Traktor 1 und dem Anbaugerät 2 entweder separate Steuervorrichtungen 21, 22 zur Ansteuerung oder eine gemeinsame Steuereinheit 23 zugeordnet sind. Die gemeinsame Steuereinheit 23 kann dann entweder auf dem Traktor 1 oder dem Anbaugerät 2 positioniert oder mobil ausgeführt sein, sodass die gemeinsame Steuereinheit 23 von dem Bediener 20 des Traktors 1 mitführbar ist. Das Fahrerassistenzsystem 3 kann auch auf einer Daten-Cloud basierend ausgeführt sein, indem Daten statt in der Speichereinheit 26 zumindest teilweise in einer externen, räumlich entfernten Speichervorrichtung eines externen Servers bzw. einer externen Recheneinheit 29 abrufbar und editierbar hinterlegt sind. Die externe Recheneinheit 29 kann Teil eines Daten-Cloudservices sein, welcher von einem Drittanbieter betreibbar ist.

Das erfindungsgemäße Fahrerassistenzsystem 3 umfasst neben der Eingabeschnittstelle 9 zumindest eine Recheneinheit 25 und eine Speichereinheit 26. Die Recheneinheit 25 verarbeitet von den Sensoreinrichtungen 18, 19 des Traktors 1 und/oder des Anbaugerätes 2 generierte Informationen 27, externe Informationen 28 und in der Speichereinheit 26 hinterlegbare Informationen 29. Die von den Sensoreinrichtungen 18, 19 generierten oder empfangenen Informationen 27 enthalten Umweltparameter 30, zu denen unter anderem Bodenart, Bodentyp, Bodenzustand, Bodenfeuchte, Topographie sowie Wetter zählen. Die Umweltparameter 30 liegen zum Teil auch als externe Informationen bzw. externe Umweltparameter 31 vor, was insbesondere für das Wetter oder für Topographiedaten gelten kann.

Die Sensoreinrichtungen 18, 19 des Traktors 1 und/oder des Anbaugerätes 2 übermitteln die generierten Informationen 27 mittelbar oder unmittelbar an das Fahrerassistenzsystem 3. Die Recheneinheit 25 ist zur Auswertung der generierten Informationen 27 eingerichtet. Die Kommunikation zwischen dem Motorsteuergerät 16, dem Getriebesteuergerät 17, den Sensoreinrichtungen 18, 19 sowie den separaten Steuervorrichtungen 21, 22 bzw. der Steuereinheit 23 und dem Fahrerassistenzsystem 3 kann über verschiedene Kommunikationswege, wie beispielsweise ein Bussystem des Traktors 1 oder des Anbaugerätes 2 oder ein drahtloses Kommunikationssystem, erfolgen.

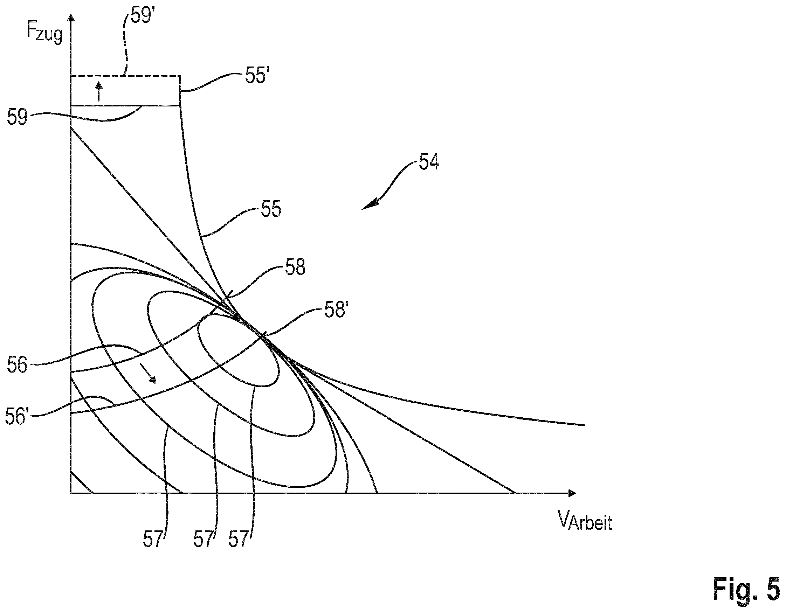

Das Fahrerassistenzsystem 3 umfasst einen kennlinienbasierend arbeitenden Hubwerkautomaten 32, durch welchen eine optimierte Einstellung durch eine Regelung der Arbeitsparameter des Traktors 1, welche Einfluss auf die vertikale Fahrwerkskraft haben, bewirkt wird. Hierzu ist in der Speichereinheit 26 des Fahrerassistenzsystems 3 zumindest ein n-dimensionales Kennfeld 54 hinterlegt, welches anhand der Darstellung gemäß der Fig. 5 noch näher erläutert wird. Insbesondere ist der Hubwerkautomat 32 für eine optimierte Einstellung von wenigstens einem Einstellparameter des zumindest einen Hubwerkes 4 als einem Arbeitsparameter des Traktors 1 in Abhängigkeit von den in der Speichereinheit 26 hinterlegten auswählbaren Regelstrategien und/oder Optimierungszielgrößen eingerichtet. Im einfachsten Fall wird dies dadurch bewirkt, dass der Hubwerkautomat 32 Steuersignale A generiert, die zumindest der Steuervorrichtung 21 des Traktors 1 bzw. der Steuereinheit 23 zugeführt werden und dort die Ansteuerung des Hubwerkes 4 durch Generierung entsprechender Steuersignale B bewirken. Traktoren 1 weisen im Allgemeinen ein Fronthubwerk und ein Heckhubwerk auf, welche von dem Hubwerkautomaten 32 gemeinsam oder unabhängig voneinander einstellbar sind.

Die Steuervorrichtung 21 des Traktors 1 oder alternativ die gemeinsame Steuereinheit 23 von Traktor 1 und dem daran adaptierten Anbaugerät 2 bildet zusammen mit dem Fahrerassistenzsystem 3 den Hubwerkautomaten 32. Dabei kann das Fahrerassistenzsystem 3 ein dem Hubwerkautomaten 32 zugeordnetes Regelwerk 33 umfassen, welches eine Optimierung der Arbeitsweise des Traktors 1 und des Anbaugerätes 2 durch eine optimierte Ansteuerung der Aktoren 7 des zumindest einen Hubwerkes 4 bewirkt, an welchem das Anbaugerät 2 adaptiert ist. Das Regelwerk 33 kann alternativ oder zusätzlich in der Steuervorrichtung 21 des Traktors 1 oder der Steuervorrichtung 22 des Anbaugerätes 2 abrufbar hinterlegt sein. Das Regelwerk 33 umfasst Algorithmen und dergleichen, um die Ansteuerung des Traktors 1 sowie des Anbaugerätes 2 durchführen zu können. Es liegt zudem im Rahmen der Erfindung, dass das benötigte Regelwerk 33 auch zentral auf einer nicht näher erläuterten externen Recheneinheit 24 oder einem sonstigen Backendsystem, beispielsweise auf einer Daten-Cloud basierend, hinterlegt sein kann und durch eine, insbesondere bidirektionale, Kommunikationsverbindung zwischen dem Traktor 1 und der externen Recheneinheit 24 abrufbar ist.

Die Optimierung wenigstens eines Arbeitsparameters durch den Hubwerkautomaten 32 umfasst die Berücksichtigung der Auswirkung auf das an das Hubwerk 4 adaptierte Anbaugerät 2 sowie die wechselseitige Kraftübertragung zwischen dem Traktor 1 und dem Anbaugerät 2. Dabei sind die Art bzw. der Typ des Anbaugerätes 2 von großer Bedeutung. So haben als Bodenbearbeitungsgeräte ausgeführte Anbaugeräte 2, wie beispielsweise ein Pflug oder ein Grubber, einen anderen Einfluss auf den Traktionswirkungsgrad als beispielsweise Anbaugeräte 2, wie Düngerstreuer oder Aufbausämaschinen, die nicht unmittelbar mit dem Boden in Eingriff stehen beziehungsweise gegenüber Bodenbearbeitungsgeräten nur geringe Horizontalkräfte hervorrufen. Der wenigstens eine Arbeitsparameter ist zumindest ein Hubwerkeinstellparameter 34 aus einer Gruppe umfassend Hubwerkposition 35 des Oberlenkers 5 und der Unterlenker 6, Unterlenkerkraft 36, Länge 37 des Oberlenkers 5, Oberlenkerkraft 38, Länge 68 einer Hubstrebe 62, Kräfte F sowie Hubwerkgeometrie G. Die Veränderung des zumindest einen Hubwerkeinstellparameters 34 erfolgt durch die Ansteuerung der Aktoren 7 mittels des Steuersignals B.

Der kennlinienbasierend arbeitende Hubwerkautomat 32 ist hierbei für eine optimierte Ansteuerung der Aktoren 7 in Abhängigkeit von in der Speichereinheit 26 hinterlegten auswählbaren Regelstrategien 39 und/oder Optimierungszielgrößen 40 eingerichtet. Durch die Auswahl einer Regelstrategie 39 und/oder einer oder mehrerer Optimierungszielgrößen 40 wird mittels des Hubwerkautomaten 32 das Gesamtsystem aus Traktor 1 und Anbaugerät 2 durch Verstellen zumindest eines der Hubwerkseinstellparameter 34 ganzheitlich optimiert. Ganzheitlich optimiert heißt dabei, dass im Unterschied zum Stand der Technik sich die Regelung der Hubwerkeinstellung, d.h. der Hubwerkseinstellparameter 34 nicht alleinig auf eine Positionsregelung, eine Zugkraftregelung oder eine Mischregelung aus Positions- und Zugkraftregelung stützt, sondern darüber hinaus Einflüsse berücksichtigt, die beispielsweise aus auftretenden Streuungen von Wirkungsgraden und oder Betriebsverhalten des Antriebsstranges 11 einschließlich des Fahrwerks des Traktors 1, welches Vorderachse VA und Hinterachse HA sowie die daran angeordneten Bodeneingriffsmittel umfasst, resultieren. Vorteilhafterweise werden hierdurch auch die in der Praxis auftretenden Streuungen von Wirkungsgraden bei verschiedenen Einsatzbedingungen berücksichtigt.

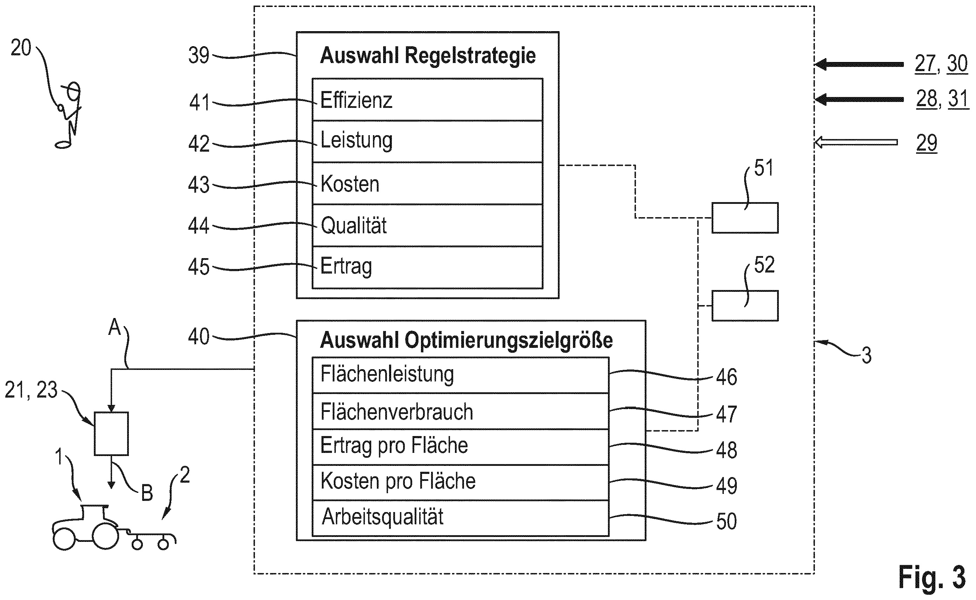

Die Darstellung in Fig. 3 zeigt eine Detailansicht des Fahrerassistenzsystems 3 des Traktors 1 wobei Visualisierungs-, Bedien- und strukturelle Aspekt in ein und derselben Darstellung zusammengefasst sind. Zur Optimierung der Arbeitsweise des Hubwerkautomaten 32 des Traktors 1 umfasst das Fahrerassistenzsystem 3 auswählbare Regelstrategien 39, wobei die auswählbaren Regelstrategien 39 zugmaschinenspezifische Strategien, anbaugerätespezifische Strategien und/oder eine Kombination aus beiden sein können. Eine effiziente Optimierung der Ansteuerung des Hubwerkautomaten 32 des Traktors 1 unter Berücksichtigung des adaptierten Anbaugerätes 2 ergibt sich dann, wenn die auswählbaren Regelstrategien 39 zumindest eine der Regelstrategien "Effizienz" 41, "Leistung" 42, "Kosten" 43, "Qualität" 44 sowie "Ertrag" 45 umfassen. Dabei werden gemäß der Regelstrategie "Effizienz" 41 der Flächenverbrauch (Liter / ha) und/oder die für die Bearbeitung erforderlichen Betriebsstunden optimiert. Der Regelstrategie "Leistung" 42 liegt die Optimierung der Flächenleistung (ha / h) zugrunde. Mit der Regelstrategie "Kosten" 43 sollen die Kosten pro Fläche (€ / ha) optimiert werden. Die Regelstrategie "Qualität" 44 bewirkt eine Optimierung der Arbeitsparameter von Traktor 1 und Anbaugerät 2 zur Erzielung einer gleichmäßigen und möglichst hohen Arbeitsqualität. Darüber hinaus ist es möglich, einen gewichten Mittelwert aus allen oder Teilen der vorgenannten Strategien über den wenigstens einen Arbeitsparameter vorzugeben.

Weiterhin umfasst das Fahrerassistenzsystem 3 zur Optimierung der Arbeitsweise des Traktors 1 durch die optimierte Ansteuerung der Aktoren 7 des zumindest einen Hubwerkes 4 auswählbare Optimierungszielgrößen 40. Die Optimierungszielgrößen 40 sind alternativ oder zusätzlich zu den Regelstrategien 39 durch den Bediener 20 auswählbar.

Die Optimierungszielgrößen 40 können "Flächenleistung" 46, "Flächenverbrauch" 47, "Ertrag pro Fläche" 48, "Kosten pro Fläche" 49 und/oder "Arbeitsqualität" 50 umfassen. Die auswählbaren Optimierungszielgrößen 40 bieten die Möglichkeit, spezifische Einzelaspekte, insbesondere in unterschiedlicher Kombination miteinander, der Optimierung der Hubwerkeinstellparameter 34 durch den Hubwerkautomaten 32 zugrunde zu legen. Die Optimierungszielgröße "Kosten pro Fläche" 49 kann beispielsweise vordergründig anfallende Personalkosten, Kraftstoffkosten, Verschleißkosten, Betriebsstunden und dergleichen mehr berücksichtigen. Die Optimierungszielgröße "Flächenleistung" 46 kann beispielsweise vordergründig auf die Steigerung der bearbeiteten Fläche und/oder der verarbeiteten Masse von Einsatzstoffen gerichtet sein. Die Optimierungszielgröße "Arbeitsqualität" 50 stellt beispielsweise die Einmischung von Ernterückständen in den Boden, die Krümelung, die Rückverfestigung, die Futterqualität, die Bodenlockerung, die Reduzierung von Bodenunebenheiten und dergleichen mehr bei der Optimierung in den Vordergrund.

Das Fahrerassistenzsystem 3 kann zudem so beschaffen sein, dass es entweder in einem Dialogmodus 51 mit dem Bediener 20 oder in einem Automatikmodus 52 betrieben werden kann. In beiden Fällen findet die Kommunikation, der Dialog mit dem Bediener 20, natürlichsprachig statt.

Die Steuervorrichtung 21 des Traktors 1 bildet zusammen mit dem Fahrerassistenzsystem 3 den Hubwerkautomaten 32, indem die Recheneinheit 25 des Fahrerassistenzsystem 3 dazu eingerichtet ist, zur Umsetzung der jeweils ausgewählten Regelstrategie 39 und/oder Optimierungszielgröße 40 generierte Informationen 27, externe Informationen 28, in der Speichereinheit 26 hinterlegte Informationen 29, welche Arbeitsparameter des Hubwerkes 4, des Antriebsstranges 11, des Traktors 1, des Anbaugerätes 2 sowie Umweltparameter 30, 31 aus aktuell vorherrschenden Umgebungsbedingungen autonom zu bestimmen bzw. zu ermitteln und der Steuervorrichtung 21 zur Ansteuerung der Aktoren 7 vorzugeben. Dies kann durch das Übermitteln der Steuersignale A an die Steuervorrichtung 21 bzw. Steuereinheit 23 erfolgen, welche daraufhin ein entsprechendes Steuersignal B an die Aktoren 7 übermittelt.

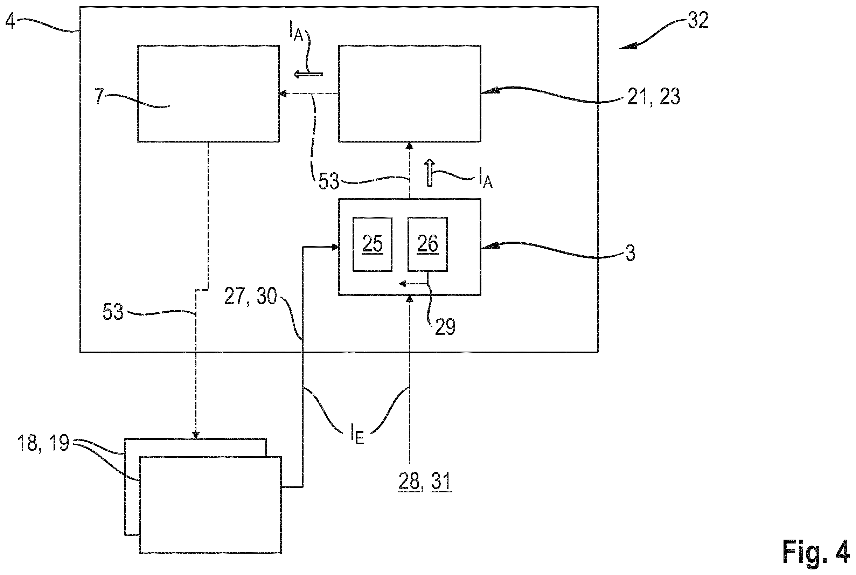

In Fig. 4 ist eine schematische Ansicht der Struktur des Hubwerkautomaten 32 dargestellt. Der Hubwerkautomat 32 umfasst das zumindest eine Hubwerk 4, die zugehörigen Aktoren 7 zur Einstellung von Unterlenker 6 und Oberlenker 5, die Steuervorrichtung 21 bzw. Steuereinheit 23 sowie das Fahrerassistenzsystem 3. Von der Steuervorrichtung 21 werden Steuersignale B an die Aktoren 7 mittels eines Datenbusses 53 übermittelt, durch welche zumindest einer der Aktoren 7 des Hubwerkes 4 eingestellt wird. Die dem Hubwerk 4 zugeordnete Sensoreinrichtung 19 überwacht die Aktoren 7, um aus den erfassten Daten der Aktoren 7 die jeweils eingestellten Hubwerkeinstellparameter 34, Hubwerkposition 35 der Unterlenker 6, Unterlenkerkraft 36, Länge 37 des Oberlenkers 5, Oberlenkerkraft 38, bestimmen zu können. Die Sensoreinrichtung 19 stellt ihre erfassten Daten als generierte Informationen 27 mittels des Bussystems 53 zumindest dem Fahrerassistenzsystem 3 zur Auswertung zur Verfügung. Darüber hinaus werden dem Fahrerassistenzsystem 3 von den anderen Sensorvorrichtungen 18 generierte Informationen 27 und Umweltparameter 30, die externen Informationen 28 und Umweltparameter 31 bereitgestellt, die beispielsweise von anderen Arbeitsmaschinen und/oder einer externen Recheneinheit 24 auf einer Hofstelle an den Traktor 1 übermittelt werden und den landwirtschaftlichen Arbeitsvorgang beeinflussen können. Die von den Sensoreinrichtungen 18, 19 bereitgestellten Daten, die generierten Informationen 27, sowie die externen Informationen 28, die in der Speichereinheit 26 hinterlegten Informationen 29 sowie die Umweltparameter 30, 31 bilden Eingangsgrößen I_{E} des Hubwerkautomaten 32. Mit I_{A} sind Ausgangsgrößen des Hubwerkautomaten 32 bezeichnet, welche der Generierung der Steuersignale A bzw. B zugrunde gelegt werden. Der Hubwerkautomaten 32 optimiert die Arbeitsweise des Hubwerkes 4 autonom, d.h. der Hubwerkautomat 32 ist dazu eingerichtet, die erforderlichen Einstellungen der Hubwerkeinstellparameter 34 der Aktoren 7 des Hubwerkes 4 kontinuierlich autonom zu bestimmen und vorzugeben. Durch den Hubwerkautomaten 32 werden an die jeweils vorliegenden Betriebs- und Erntebedingungen optimal angepasste Arbeitsparameter, insbesondere Hubwerkeinstellparameter 34, für den Traktor 1 bereitgestellt.

In Fig. 5 ist exemplarisch ein n-dimensionales Kennfeld 54 zur Ansteuerung der Aktoren 7 des Hubwerkes 4 des Traktors 1 dargestellt. In der Speichereinheit 26 ist ein funktionales Modell des Traktors 1 und des Anbaugerätes 2 hinterlegt, welches zumindest einen Teil der funktionalen Zusammenhänge des Traktors 1 und des an das Hubwerk 4 adaptierten Anbaugerätes 2 abbildet. Denkbar sind auch reine Black-Box-Modelle, die beispielsweise auf Künstlicher Intelligenz (Kl) oder neuronalen Netzwerken basieren, oder Mischformen, um zumindest einen Teil der funktionalen Zusammenhänge des Traktors 1 und des Anbaugerätes 2 abzubilden. Zur Abbildung der funktionalen Zusammenhänge des Traktors 1 und des Anbaugerätes 2 ist den Arbeitsparametern Zugkraftkennlinie 55, 55' des Traktors 1 und Zugkraftkennlinie 56, 56' des Anbaugerätes 2 in Abhängigkeit von zumindest einem Hubwerkeinstellparameter 34, insbesondere allen Hubwerkeinstellparametern 34, das mindestens eine n-dimensionale Kennfeld 54 zugeordnet, wobei der zumindest eine Hubwerkeinstellparameter 34 als Ausgangsgröße I_{A} des mindestens einen n-dimensionalen Kennfeldes 54 definiert ist. Die Zugkraftkennlinien 55 und 56 ergeben sich für eine erste Einstellung von zumindest einem Hubwerkeinstellparameter 34 und die Zugkraftkennlinien 55' und 56' ergeben sich für eine zweite, von der ersten Einstellung abweichende Einstellung von dem zumindest einem Hubwerkeinstellparameter 34. Das n-dimensionale Kennfeld 54 umfasst insbesondere mindestens drei Eingangsgrößen I_{E}.

In dem Kennfeld 54 sind als Eingangsgrößen I_{E} die Arbeitsgeschwindigkeit v_{Arbeit} über die Zugkraft F_{Zug} aufgetragen. Die Ausgangsgröße I_{A} bildet der zumindest eine Hubwerkeinstellparameter 34. Mit den Bezugszeichen 55, 55' bzw. 56, 56' sind die Zugkraftkennlinien des Traktors 1 sowie des Anbaugerätes 2 bei unterschiedlich eingestellten Hubwerkeinstellparameter 34 bezeichnet, die in dem n-dimensionalen Kennfeld 54 jeweils exemplarisch dargestellt sind. Mit 59 bzw. 59' ist die jeweils maximale Zugkraft des Traktors 1 für unterschiedlich eingestellte Hubwerkeinstellparameter 34 bezeichnet. Weiterhin sind Linien 57 konstanten spezifischen Kraftstoffverbrauchs in Form von sogenannten "Muschelkennlinien" im Hintergrund dargestellt. Der jeweilige Schnittpunkt der Zugraftkennlinie 56,56' des Anbaugerätes 2 mit der Zugraftkennlinie 55 bzw. 55' des Traktors 1 definiert einen sich bei Volllast bei verschiedenen Einstellungen der Hubwerkeinstellparameter 34 ergebenden Betriebspunkt 58 bzw. 58'. Die Linien 57 konstanten spezifischen Kraftstoffverbrauchs können bei bekannter Konfiguration des Antriebsstranges 11 für einen spezifischen Betriebszustand berechnet werden.

So wird beispielhaft durch eine Veränderung der Hubwerkeinstellparameter 34 eine Erhöhung der Zugkraft F_{Zug} des Traktors 1 ausgehend von der maximalen Zugkraft 59 gemäß der Zugkraftkennlinie 55 auf die maximale Zugkraft 59' gemäß der Zugkraftkennlinie 55' des Traktors 1 bewirkt. Korrespondierend hiermit verlagert sich die mit der ersten Einstellung der Hubwerkeinstellparameter 34 einstellende Zugkraftkennlinie 56 hin zu der mit der zweiten Einstellung der Hubwerkeinstellparameter 34 einstellenden Zugkraftkennlinie 56' des Anbaugerätes 2.

Ein spezifischer Betriebszustand kann durch bestimmbare Arbeitsparameter des Traktors 1, insbesondere des Antriebsstranges 11, des zumindest einen Nebenaggregates 15 des Antriebsstranges 11, des Anbaugerätes 2 und/oder aus den Umgebungsbedingungen resultierenden Umweltparametern 30, 31, zu denen unter anderem Bodenart, Bodentyp, Bodenzustand, Bodenfeuchte, Topographie sowie Wetter zählen, festgelegt werden. Die Bestimmung der Arbeitsparameter kann dabei durch Messen, Berechnen oder auf sonstige Wiese erfolgen. Die Arbeitsparameter des Antriebsstranges 11, des zumindest eines Nebenaggregates 15, des Anbaugerätes 2, des Hydraulikantriebsstranges, des elektrischen Antriebsstranges und/oder anhand der aktuell vorherrschenden Umgebungsbedingungen bestimmten Umweltparameter 30, 31 bilden die zur optimierten Ansteuerung der Aktoren 7 des Hubwerkes 4, d.h. die durch den Hubwerkautomaten 32 zur optimalen Einstellung zu berücksichtigenden Parameter.

Durch die grundsätzliche Kenntnis der Charakteristik der Zugkraft F_{Zug} des Traktors 1, des Zugkraftbedarfs des Anbaugerätes 2 und des Energieverbrauchs über der Arbeitsgeschwindigkeit v_{Arbeit} für verschiedene Randbedingungen entsteht das n-dimensionales Kennfeld 54. Beim Ausführen von Arbeiten durch den Traktor 1 kann die genaue Ausprägung des n-dimensionalen Kennfelds 54 durch Ermitteln eines der in dem Kennfeld 54 aufgetragenen Parameter an die aktuellen Einsatzbedingungen angepasst werden. Die Kenntnis des Kennfelds 54 ermöglicht es dem Hubwerkautomaten 32 den oder die Hubwerkeinstellparameter 34 automatisch so zu verstellen, dass das Systemverhalten von Traktor 1 und Anbaugerät 2 entsprechend der jeweiligen Zielgröße, die aus der ausgewählten Regelstrategie 39 und/oder Optimierungszielgröße 40 resultiert, optimiert wird. Die Stellgrößen sind dabei die Hubwerkeinstellparameter 34.

Das Ändern der Hubwerkeinstellparameter 34 hat einen Einfluss auf die Lage der Zugkraftkennlinien 55, 55' bzw. 56, 56' in dem Kennfeld 54 und damit auf die übertragene Leistung. Die Linien 57 konstanten spezifischen Energieverbrauchs können bei bekannter Antriebsstrangkonfiguration für einen Betriebszustand berechnet werden. Relevante Betriebszustände können im beschriebenen Ausführungsbeispiel beispielsweise definiert sein bzw. bestimmt werden durch:
- Hubwerkposition
- Arbeitstiefe des Anbaugerätes
- Signale von als Zugkraftmessbolzen ausgeführten Sensoreinrichtungen 19 im Hubwerk 4
- Traktionsverstärkereinstellungen
- Kräfte in der Anbaugeräteschnittstelle
- Unterschiedliche Motordrückung
- Unterschiedliche Reifeninnendrücke
- Unterschiedliche Ansteuerung eines Nebenaggregates 15
- Ausgangsleistung des Antriebsmotors 12
- Ausgangsleistung des Getriebes 13 bzw. Getriebeauslastung
- Antriebsleistung eines Nebenverbrauchers ermittelt aus der Differenz von Motorausgangsleistung und Ausgangsleistung des Getriebes 13 unter Berücksichtigung eines Getriebewirkungsgradkennfelds
- Leistungsfluss im Nebenabtrieb 14
- Leistungsfluss in einem Hydraulikantriebsstrang
- Leistungsfluss in einem elektrischen Antriebsstrang
- Schlupf
- Neigungswinkel des Traktors
- Motordrehzahl
- Getriebeübersetzung
- Theoretische und reale Fahrgeschwindigkeit
- Reifengröße und Reifentyp
- Neigungswinkel in Quer- und Längsrichtung
- Traktorgeometrie
- Anbaugerätegewicht
- Anbaugerätegeometrie
- Anbaugerätetyp
- Bodenart
- Bodentyp
- Bodenzustand
- Bodenfeuchte

Diese nicht abschließend aufgelisteten Arbeitsparameter und Betriebsparameter, die in Form der Daten 28, 29, 30 zumindest teilweise zur Verfügung stehen bzw. gestellt werden können, sowie, sowie die Umweltparameter 31, 32 beeinflussen die optimierte Einstellung des zumindest einen Arbeitsparameter des Traktors 1, insbesondere der Hubwerkeinstellparameter 34, des zumindest einen Hubwerkes 4.

Die Arbeitsparameter des Antriebsstranges 11 umfassen unter anderem die Ausgangsleistung des zumindest einen Antriebsmotors 12, die Ausgangsleistung des Getriebes 13 bzw. die Getriebeauslastung, die Antriebsleistung des zumindest einen Nebenaggregates 15 und/oder des zumindest einen Nebenabtriebs 14, den Schlupf zwischen den als Bodeneingriffsmittel ausgeführten Rädern VR, HR des Traktors 1 und dem Boden, die Motordrehzahl, die Fahrgeschwindigkeit, die Getriebeübersetzung, der Status von Allradantrieb und/oder Differentialsperre und/oder den Leistungsfluss im Antriebsstrang des Nebenabtriebs 14, im Hydraulikantriebsstrang oder im elektrischen Antriebsstrang. So kann beispielsweise die Antriebsleistung des zumindest einen Nebenaggregates 15 aus der Differenz von Ausgangsleistung des Antriebsmotors 12 und der Ausgangsleistung des Getriebes 13 unter Berücksichtigung des Getriebewirkungsgradkennfeldes ermittelt werden.

Weitere Arbeitsparameter des Traktors 1 sind unter anderem ein Neigungswinkel des Traktors 1 in Quer- und Längsrichtung, das Gewicht des Traktors 1, Ballastierung, Reifengröße und Reifentyp der Räder VR, HR an den Achsen VA, HA, Achslasten, Radkräfte, Raddrehmomente, Traktionsparameter, welche entweder sensorisch von einer der Sensoreinrichtungen 18, 19 erfasst werden oder aus von den Sensoreinrichtungen 18, 19 erfassten oder sonstigen empfangenen oder hinterlegten Daten berechnet werden können.

Des Weiteren können die Arbeitsparameter des Anbaugerätes 2 die Art und/oder den Typ des Anbaugerätes 2, die Arbeitsbreite, die Hubposition, die Arbeitstiefe sowie weitere Einstellparameter des Anbaugerätes 2, beispielsweise Vorderfurchenbreite, Zugpunkt, Auflagedruck und dergleichen mehr, umfassen.

Die Umweltparameter 30, 31 bilden unter anderem Bodenart, Bodentyp, Bodenzustand, Bodenfeuchte, die Topographie, das Wetter und dergleichen mehr ab.

Die Recheneinheit 25 kann das mindestens eine n-dimensionale Kennfeld 54 im laufenden Betrieb, insbesondere zyklisch, mit den Einsatzbedingungen des Traktors 1 und des daran adaptierten Anbaugerätes 2 abgleichen. Hierzu kann vorzugsweise in der Speichereinheit 26 mindestens ein n-dimensionales Initialkennfeld 54i hinterlegt sein. Somit kann die Recheneinheit 25 des Fahrerassistenzsystems 3 bei der ersten Ermittlung der Hubwerkeinstellparameter 34 nach Auswahl einer Regelstrategie 30 oder einer Optimierungszielgröße 40 die Ermittlung basierend auf dem Initialkennfeld 54i vornehmen.

Des Weiteren kann die Recheneinheit 26 dazu eingerichtet sein, autonom eine Anpassung der Ausprägung des Initialkennfeldes 54i an bestehende Einsatzbedingungen durch die Verwendung von Bemessungswerten und/oder den gemessenen Arbeitsparametern in Form der generierten Informationen 27, der externen Informationen 28 und der in der Speichereinheit 26 hinterlegten Informationen 29 sowie der Umweltparameter 30, 31 oder alternativ oder zusätzlich durch das Anfahren von Stützstellen im Initialkennfeld 54i durchzuführen. Ausgehend von dem Initialkennfeld 54i kann durch das Einstellen von vordefinierten Betriebspunkten, die Stützstellen in dem Initialkennfeld 54i darstellen, die Ausprägung des Initialkennfeldes 54i an die aktuellen Einsatzbedingungen angepasst werden, so dass durch die Anpassung das Kennfeld 54 generiert wird. Hierzu werden in einem ersten Schritt Bemessungswerte respektive Arbeitsparameter sowie Umweltparameter 30, 31 mittels der jeweiligen Sensoreinrichtungen 18, 19 akquiriert und/oder als externe Information 28 empfangen und durch die Recheneinheit 25 vorverarbeitet. Die so bestimmten Bemessungswerte respektive Arbeitsparameter, beispielsweise Drehzahlen, Kräfte, Schlupf, Fahrgeschwindigkeit, werden in das n-dimensionale Initialkennfeld 54i eingetragen. Insbesondere können die Bemessungswerte respektive Arbeitsparameter in das n-dimensionale Initialkennfeld 54i eingetragen werden, wenn diese quasistationär sind bzw. einen quasistationären Zustand erreicht haben.

Wenn im n-dimensionalen Raum des Initialkennfeldes 54i einzelne durch die Sensoreinrichtungen 18, 19 bestimmte Bemessungswerte fehlen, weil diese bei regulärer Feldfahrt nicht auftreten oder nur unzureichend vorliegen, da diese im standardmäßigen Betrieb des Traktors 1 und/oder des Anbaugerätes 2 nicht angefahren werden, können stattdessen spezifische Stützstellen aktiv angefahren werden. Der zweite Schritt umfasst die Prüfung und Adaption des funktionalen Modells von Traktor 1 und Anbaugerät 2 auf Basis von Änderungen der aktuellen Einsatzbedingungen, die wiederum mittels der Arbeitsparameter, d.h. der generierten Informationen 27, der externen Informationen 28 und der in der Speichereinheit 26 hinterlegten Informationen 29, sowie den zur Verfügung stehenden Umweltparameter 30, 31 bestimmt werden.

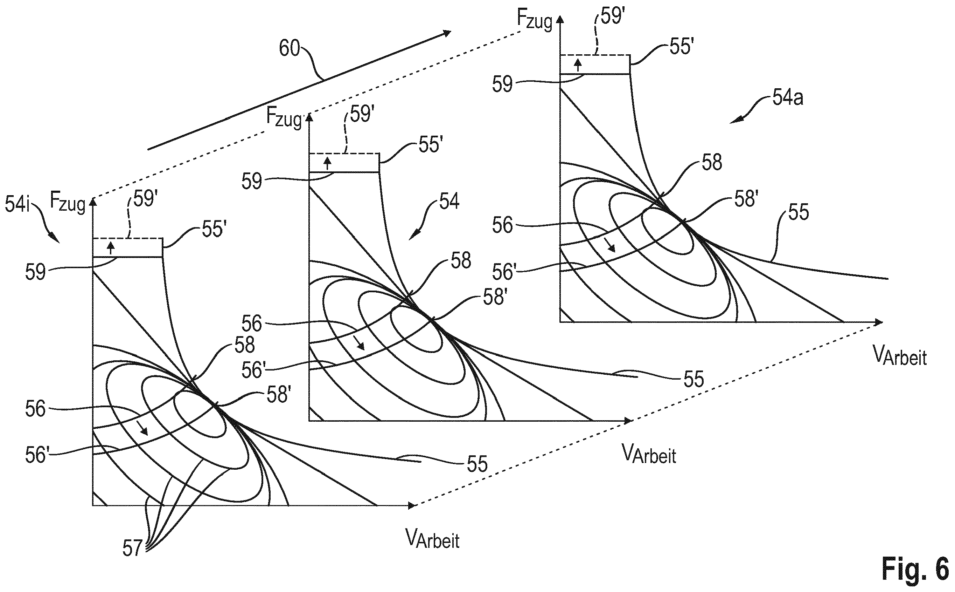

Die Darstellung in Fig. 6 zeigt lediglich exemplarisch ein n-dimensionales Initialkennfeld 54i, welches beispielhaft aufgrund einer Änderung zumindest eines Arbeitsparameters im Antriebsstrang 11 adaptiert wird. Bei dem zumindest einen sich ändernden Arbeitsparameter handelt es sich beispielhaft um die Drehzahl des als Motorlüfter ausgeführten Nebenaggregates 15, welche im Betrieb in Abhängigkeit von der Belastung des Antriebsmotors 12 ansteigt, wie in Fig. 5 durch den Pfeil 60 veranschaulicht ist. Die Zunahme 60 der Drehzahl des Motorlüfters als Nebenaggregat 15 führt zu einer Adaption des Initialkennfeldes 54i hin zum Kennfeld 54 bzw. weiter zu einem wegen sich ändernder Arbeitsbedingungen, Umgebungsbedingungen, Arbeitsparameter oder dergleichen erneut adaptierten Kennfeld 54a.

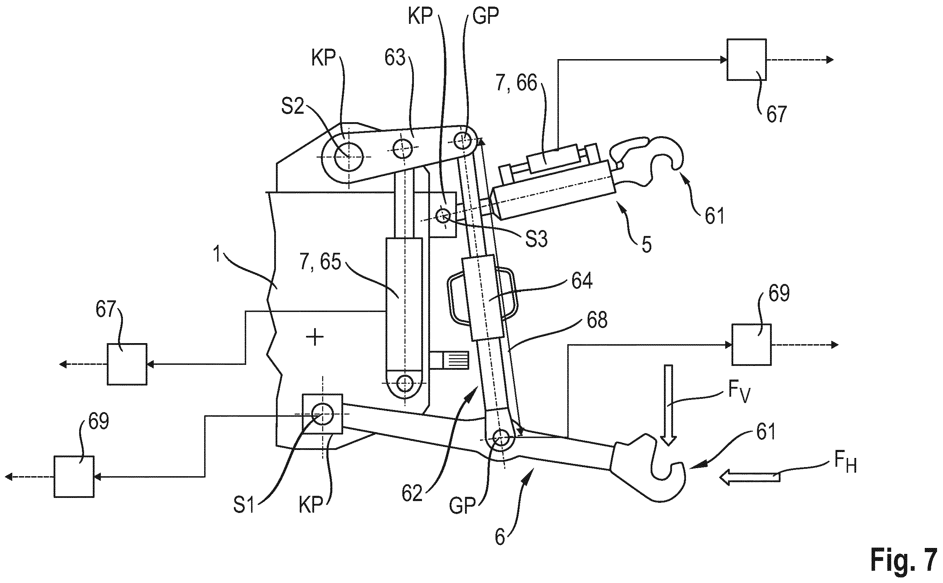

In Fig. 7 ist eine schematische Seitenansicht des als Dreipunkt-Kraftheber ausgebildeten Hubwerkes 4 des Traktors 1 dargestellt, welches die beiden länglichen Unterlenker 6, die mit vorbestimmtem Lenkerabstand voneinander längsseits nebeneinander angeordnet sind, und den länglichen Oberlenker 7, der mittig in dem Lenkerabstand zwischen und etwa parallel zu den Unterlenkern 6 angeordnet ist, umfasst. Die Unterlenker 6 weisen jeweils ein vorderes Unterlenkerlängsende, an dem jeweils ein Aufnahmeelement 61, welches als nach oben offener Fanghaken ausgebildet ist, vorgesehen ist, und ein hinteres Unterlenkerlängsende auf, das jeweils schwenkbar an einem Koppelpunkt KP des Traktors 1 gelagert ist, so dass die Unterlenker 6 um eine sich quer zur Längsrichtung des Traktors 1 und etwa horizontal verlaufende Schwenkachse S1 verschwenkbar sind und damit das jeweilige Aufnahmeelement 61, respektive der Fanghaken, höhenverstellbar ist.

Die Unterlenker 6 sind jeweils mittels einer in ihrer Länge 68 verstellbaren Hubstange bzw. Hubstrebe 62 (in Fig. 7 ist nur eine Hubstrebe 62 ersichtlich) schwenkbar mit einem jeweiligen schwenkbar an dem Traktor 1 gelagerten Hubarm 63 bzw. Hubwelle (in Fig. 7 ist nur ein Hubarm 63 ersichtlich) verbunden. Hierzu ist die jeweilige Hubstreben 62 in einem Gelenkpunkt GP mit dem Unterlenker 6 sowie dem Hubarm 63 verbunden. Die Hubarme 63 bzw. die Hubwellen sind um eine etwa horizontal verlaufende Schwenkachse S2 verschwenkbar an dem Traktor 1 angelenkt. Die Längenverstellung der jeweiligen Hubstrebe 62 kann beispielsweise durch eine als Gewindespindel ausgeführte Aktuatorik 64 manuell erfolgen. Denkbar ist auch eine Ausführung der Aktuatorik 64 als ein Linearantrieb. Um eine Schwenkbewegung des Hubarms 63 und dadurch eine Schwenkbewegung des damit verbundenen Unterlenkers 6 zu bewirken bzw. anzutreiben, ist für jeden Hubarm 63 ein als Hubwerkzylinder 65 ausgeführter Aktor 7 vorgesehen, welcher mit einem Längsende (Kolbenstange oder Zylinder) schwenkbar an dem Traktor 1 gelagert ist und mit dem anderen Längsende (Zylinder oder Kolbenstange) schwenkbar mit dem Hubarm 63 verbunden ist. Durch die Längenverstellbarkeit der Hubstrebe 62 kann eine Höhe des jeweiligen Unterlenkers 6 bzw. eine Höhe von dessen Aufnahmeelementen 61 voreingestellt werden. Die Länge 68 der Hubstrebe 62 kann ein weiterer Hubwerkeinstellparameter 34 aus der Gruppe der Hubwerkeinstellparameter 34 sein.

Der Oberlenker 5 weist in zu den Unterlenkern 6 ähnlicher Weise ein vorderes Oberlenkerlängsende, an dem ein als nach unten offener Fanghaken ausgeführtes Aufnahmeelement 61 vorgesehen ist, und ein hinteres Oberlenkerlängsende auf, das um eine Schwenkachse S3 schwenkbar an einem weiteren Koppelpunkt KP des Traktors 1 gelagert ist, so dass der Oberlenker 5 verschwenkbar und damit das Aufnahmeelement 61 höhenverstellbar ist. Obwohl hier nicht näher gezeigt und beschrieben, kann der Antrieb für die Schwenkbewegung des Oberlenkers 5 in zu den Unterlenkern 6 ähnlicher Weise realisiert sein. Der Oberlenker 5 ist mittels eines vorzugsweise als Hydraulikzylinder 66 ausgeführten Aktors 7 längenverstellbar.

Wenigstens ein Arbeitsparameter umfasst zumindest eine von dem Anbaugerät 2 auf den Traktor 1 übertragene resultierende Kraft F oder Kraftkomponente F_{H}, F_{V}, welche in horizontaler und/oder vertikaler Richtung wirkt bzw. wirken, wie sie lediglich beispielhaft an dem Aufnahmeelement 61 des Unterlenkers 6 angedeutet sind. Weitere Kräfte treten unter anderem entsprechend an dem Aufnahmeelement 61 des zweiten Unterlenkers 6 sowie dem Aufnahmeelement 61 des Oberlenkers 5 auf.

Den Aktoren 7 ist wenigstens ein Kraftmesssystem 67 zugeordnet. Vorzugweise weist jeder der Aktoren 7 des Hubwerkes 4 ein Kraftmesssystem 67 auf, welches in den als Hubwerkzylindern 65 bzw. als Hydraulikzylinder 66 ausgeführten Aktoren 7 von dem Hubwerk 4 aufgenommene Kräfte bestimmt. Hierzu können ausgeübte bzw. aufgenommene Kräfte F bzw. Kraftkomponenten F_{H}, F_{V} beispielsweise aus den jeweiligen Drücken in den Hubwerkzylindern 65 bzw. dem Hydraulikzylinder 66 bestimmt werden. Zudem können Kraftmesseinrichtungen wie Kraftmessbolzen zumindest in den Koppelpunkten KP angeordnet sein. Von den Kraftmesssystemen 67 erzeugte Signale bzw. ausgewertete Daten werden, letztere sofern die Kraftmesssysteme 67 über eine eigene Auswerteeinheit verfügen, an das Fahrerassistenzsystem 3 zur weiteren Bearbeitung und Verarbeitung übermittelt.

Zusätzlich oder alternativ kann zumindest einer der längenveränderlichen Hubstreben 62 ein weiteres Kraftmesssystem 69 zugeordnet sein. Das Kraftmesssystem 69 ist dazu eingerichtet, über die Aufnahmeelement 61, respektive die Fanghaken, aufgenommene bzw. eingeleitete Horizontal- und/oder Vertikalkräfte F_{H}, F_{V} zu bestimmen. Hierzu können beispielsweise in den Gelenkpunkten GP geeignete Kraftmesseinrichtungen angeordnet sein. Dadurch lassen sich Längskräfte in den Hubstreben 62 bestimmen.

Zusätzlich sind zumindest in den Koppelpunkten KP Positionssensoren angeordnet, mittels der wenigstens die jeweilige Position von Oberlenker 5, Unterlenkern 6 sowie Hubarmen 63 bestimmbar ist. Die Positionsdaten ermöglichen es, zusammen mit Informationen über die Länge 37 des Oberlenkers 5, der Länge 68 der Hubstreben 62, der Länge der Unterlenker 6 sowie weiteren die Geometrie beeinflussenden Größen, auf die aktuell eingestellte Hubwerkgeometrie G zu schließen.

**Bezugszeichenliste**

| | | | |
|---|---|---|---|
| 1 | Traktor | 34 | Hubwerkeinstellparameter |
| 2 | Anbaugerät | 35 | Hubwerkposition |
| 3 | Fahrerassistenzsystem | 36 | Unterlenkerkraft |
| 4 | Hubwerk | 37 | Länge |
| 5 | Oberlenker | 38 | Oberlenkerkraft |
| 6 | Unterlenker | 39 | Regelstrategie |
| 7 | Aktor | 40 | Optimierungszielgröße |
| 8 | Ballastgewicht | 41 | Effizienz |
| 9 | Eingabeschnittstelle | 42 | Leistung |
| 10 | Eingabegerät | 43 | Kosten |
| 11 | Antriebsstrang | 44 | Qualität |
| 12 | Antriebsmotor | 45 | Ertrag |
| 13 | Getriebe | 46 | Flächenleistung |
| 14 | Nebenabtrieb | 47 | Flächenverbrauch |
| 15 | Nebenaggregat | 48 | Ertrag pro Fläche |
| 16 | Motorsteuergerät | 49 | Kosten pro Fläche |
| 17 | Getriebesteuergerät | 50 | Arbeitsqualität |
| 18 | Sensoreinrichtung | 51 | Dialogmodus |
| 19 | Sensoreinrichtung | 52 | Automatikmodus |
| 20 | Bediener | 53 | Bussystem |
| 21 | Steuervorrichtung | 54 | Kennfeld |
| 22 | Steuervorrichtung | 54i | Initialkennfeld |
| 23 | Steuereinheit | 54a | Adaptiertes Kennfeld |
| 24 | Externe Recheneinheit | 55,55' | Zugkraftkennlinie |
| 25 | Recheneinheit | 56,56' | Zugkraftkennlinie |
| 26 | Speichereinheit | 57 | Linie konstanten Kraftstoffverbrauchs |
| 27 | Generierte Information | 58,58' | Betriebspunkt |
| 28 | Externe Information | 59,59' | Maximale Zugkraft |
| 29 | Hinterlegbare Information | 60 | Pfeil |
| 30 | Umweltparameter | 61 | Aufnahmeelement |
| 31 | Externer Umweltparameter | 62 | Hubstrebe |
| 32 | Hubwerkautomat | 63 | Hubarm |
| 33 | Regelwerk | 64 | Aktuatorik |
| 65 | Hubwerkzylinder | | |
| 66 | Hydraulikzylinder | | |
| 67 | Kraftmesssystem | | |
| 68 | Länge von 62 | | |
| 69 | Kraftmesssystem | | |
| A | Steuersignal | | |
| B | Steuersignal | | |
| I_{E} | Eingangsgröße | | |
| I_{A} | Ausgangsgröße | | |
| VA | Vorderachse | | |
| HA | Hinterachse | | |
| VR | Rad | | |
| HR | Rad | | |
| v_{Arbeit} | Arbeitsgeschwindigkeit | | |
| F_{Zug} | Zugkraft | | |
| KP | Koppelpunkt | | |
| GP | Gelenkpunkt | | |
| S1,S2 | Schwenksachse | | |
| S3 | Schwenksachse | | |
| F | Kraft | | |
| F_{H} | Horizontalkraft | | |
| Fv | Vertikalkraft | | |
| G | Hubwerkgeometrie | | |

## Patentansprüche

1. Traktor (1) mit zumindest einem Hubwerk (4), das einen Oberlenker (5) sowie Unterlenker (6) und diesen zugeordnete Aktoren (7) aufweist, und zumindest einem an das Hubwerk (4) adaptierten Anbaugerät (2), umfassend ein den Betrieb zumindest des Traktors (1) optimierendes Fahrerassistenzsystem (3), welches über eine Recheneinheit (25), eine Speichereinheit (26) und zumindest eine Eingabeschnittstelle (9, 10) verfügt, wobei die Recheneinheit (25) von maschineninternen Sensorsystemen generierte Informationen, externe Informationen und in der Speichereinheit (26) hinterlegbare Informationen verarbeitet, und wobei der Traktor (1) und/oder das zumindest eine Anbaugerät (2) eine Steuervorrichtung (21, 22, 23) zur Steuerung und Regelung des Traktors (1) und/oder des Anbaugerätes (2) umfassen, **dadurch gekennzeichnet, dass** das Fahrerassistenzsystem (3) einen Hubwerkautomaten (32) umfasst, wobei der Hubwerkautomat (32) eingerichtet ist, kennlinienbasiert zu arbeiten, und wobei der Hubwerkautomat (32) für eine optimierte Einstellung von wenigstens einem Arbeitsparameter des Traktors (1) in Abhängigkeit von in der Speichereinheit (26) hinterlegten auswählbaren Regelstrategien (39) und/oder Optimierungszielgrößen (40) eingerichtet ist.

2. Traktor (1) nach Anspruch 1, **dadurch gekennzeichnet, dass** die Optimierung des wenigstens einen Arbeitsparameters durch den Hubwerkautomaten (32) die Berücksichtigung der Auswirkung auf das an das Hubwerk (4) adaptierte Anbaugerät (2) sowie die wechselseitige Kraftübertragung zwischen dem Traktor (1) und dem Anbaugerät (2) umfasst.

3. Traktor (1) nach Anspruch 1 oder 2, **dadurch gekennzeichnet, dass** der wenigstens eine Arbeitsparameter zumindest eine vom Anbaugerät (2) auf den Traktor (1) übertragene resultierende Kraft oder Kraftkomponente umfasst, welche in horizontaler und/oder vertikaler Richtung wirken.

4. Traktor (1) nach einem der Ansprüche 1 bis 3, **dadurch gekennzeichnet, dass** der wenigstens eine Arbeitsparameter zumindest ein Hubwerkeinstellparameter (34) aus einer Gruppe umfassend Hubwerkposition (35) des Oberlenkers (5) und/oder der Unterlenker (6), Hubwerkkraft (36) der Unterlenker (6), Länge (37) des Oberlenkers (5) und/oder der Unterlenker (6), Oberlenkerkraft (38), Länge (68) einer Hubstrebe (62), Hubwerkgeometrie (G) ist.

5. Traktor (1) nach einem der vorangehenden Ansprüche, **dadurch gekennzeichnet, dass** die auswählbare Regelstrategie (39) zumindest eine Strategie "Effizienz" (41), "Leistung" (42), "Kosten" (43), "Qualität" (44), "Ertrag" (45) oder eine Kombination der Strategien "Effizienz" (41), "Leistung" (42), "Kosten" (43), "Qualität" (44) und/oder "Ertrag" (45) umfasst.

6. Traktor (1) nach einem der vorangehenden Ansprüche, **dadurch gekennzeichnet, dass** die Optimierungszielgrößen (40) zumindest eine Zielgröße "Flächenleistung" (46), "Flächenverbrauch" (47), "Ertrag pro Fläche" (48), "Kosten pro Fläche" (49) und/oder "Arbeitsqualität" (50) umfassen.

7. Traktor (1) nach einem der vorangehenden Ansprüche, **dadurch gekennzeichnet, dass** die Steuervorrichtung (21, 23) des Traktors (1) zusammen mit dem Fahrerassistenzsystem (3) den Hubwerkautomaten (32) bildet, indem die Recheneinheit (25) dazu eingerichtet ist, zur Umsetzung der jeweils ausgewählten Regelstrategie (39) und/oder Optimierungszielgröße (40) Parameter autonom zu ermitteln und der Steuervorrichtung (21, 23) des Traktors (1) vorzugeben, die den wenigstens einen einzustellenden Arbeitsparameter beeinflussen.

8. Traktor (1) nach Anspruch 7, **dadurch gekennzeichnet, dass** die zur optimierten Ansteuerung des zumindest einen Hubwerkes (4) zu berücksichtigenden Parameter Arbeitsparameter des Traktor (1), Arbeitsparameter eines Antriebsstranges (11) des Traktors (1), Arbeitsparameter des Anbaugerätes (2) und/oder aus Umgebungsbedingungen resultierende Umweltparameter (30, 31) sind.

9. Traktor (1) nach einem der vorangehenden Ansprüche, **dadurch gekennzeichnet, dass** zumindest an dem Traktor (1) Sensoreinrichtungen (18, 19) angeordnet sind, die zur Bestimmung von Arbeitsparametern und/oder Umweltparametern (30, 31) eingerichtet sind.

10. Traktor (1) nach einem der vorangehenden Ansprüche, **dadurch gekennzeichnet, dass** das Hubwerk (6) zumindest einen als Hubwerkzylinder (65) ausgeführten Aktor (7) mit einem dem Aktor (7) zugeordneten Kraftmesssystem (67) umfasst.

11. Traktor (1) nach einem der vorangehenden Ansprüche, **dadurch gekennzeichnet, dass** das Hubwerk (6) zumindest eine längenveränderliche Hubstrebe (62) mit einem der Hubstrebe (62) zugeordneten Kraftmesssystem (67) umfasst.

12. Traktor (1) nach einem der vorangehenden Ansprüche, **dadurch gekennzeichnet, dass** das Hubwerk (6) ein Kraftmesssystem (69) umfasst, welches zur Erfassung von Kräften, die an endseitig der Unterlenker (6) angeordneten Aufnahmeelementen (61) für das Anbaugerät (2) eingeleitet werden, eingerichtet ist.

13. Traktor (1) nach einem der vorangehenden Ansprüche, **dadurch gekennzeichnet, dass** das Fahrerassistenzsystem (3) zum Empfang von externen Informationen (28) eingerichtet ist, um Arbeitsparameter und/oder Umweltparameter (30, 31) zu bestimmen.

14. Traktor (1) nach einem der vorangehenden Ansprüche, **dadurch gekennzeichnet, dass** in der Speichereinheit (26) ein funktionales Modell des Traktors (1) und des Anbaugerätes (2) hinterlegt ist, welches zumindest einen Teil der funktionalen Zusammenhänge des Traktors (1) und des daran adaptierten Anbaugerätes (2) abbildet.

15. Traktor (1) nach einem der vorangehenden Ansprüche, **dadurch gekennzeichnet, dass** zur Abbildung der funktionalen Zusammenhänge des Traktors (1) dem zumindest einen Hubwerkeinstellparameter (34) mindestens ein n-dimensionales Kennfeld (54) zugeordnet ist, wobei der jeweilige Hubwerkeinstellparameter (34) als Ausgangsgröße (I_{A}) des mindestens einen n-dimensionalen Kennfeldes (54) definiert ist.

16. Traktor (1) nach Anspruch 15, **dadurch gekennzeichnet, dass** zumindest ein oder mehrere Arbeitsparameter des Traktors (1), des Anbaugerätes (2) und/oder aus den Umgebungsbedingungen resultierende Umweltparameter (30, 31) die Eingangsgrößen (I_{E}) des mindestens einen n-dimensionalen Kennfeldes (54) bilden.

17. Traktor (1) nach einem der Ansprüche 15 oder 16, **dadurch gekennzeichnet, dass** die Recheneinheit (25) das mindestens eine n-dimensionale Kennfeld (54) im laufenden Betrieb, insbesondere zyklisch, mit den Einsatzbedingungen des Traktors (1) und des Anbaugerätes (2) abgleicht, vorzugsweise, dass in der Speichereinheit (26) mindestens ein n-dimensionales Initialkennfeld (54i) für den zumindest einen Hubwerkeinstellparameter (34) hinterlegt ist, und dass bei einer ersten Ermittlung des zumindest einen Hubwerkeinstellparameters (34) die Recheneinheit (25) die Ermittlung basierend auf dem Initialkennfeld (54i) vornimmt.

18. Traktor (1) nach Anspruch 17, **dadurch gekennzeichnet, dass** die Recheneinheit (25) dazu eingerichtet ist, eine Anpassung der Ausprägung des Initialkennfeldes (54i) an bestehende Einsatzbedingungen durch die Verwendung bestimmter Arbeitsparameter zumindest des Traktors (1) oder durch das Anfahren von Stützstellen im Initialkennfeld (54i) durchzuführen.

19. Traktor (1) nach einem der vorangehenden Ansprüche, **dadurch gekennzeichnet, dass** das Fahrerassistenzsystem (3) auf einem Daten-Cloudservice basierend ausgeführt ist.

20. Verfahren zum Betreiben eines Traktors (1) mit zumindest einem Hubwerk (4), das einen Oberlenker (5) sowie Unterlenker (6) und diesen zugeordnete Aktoren (7) aufweist, und zumindest einem an das Hubwerk (4) adaptierten Anbaugerät (2), umfassend ein den Betrieb zumindest des Traktors (1) optimierendes Fahrerassistenzsystem (3), welches über eine Recheneinheit (25), eine Speichereinheit (26) und zumindest eine Eingabeschnittstelle (9, 10) verfügt, wobei durch die Recheneinheit (25) von maschineninternen Sensorsystemen generierte Informationen, externe Informationen und in der Speichereinheit (26) hinterlegbare Informationen verarbeitet werden, und wobei der Traktor (1) und/oder das zumindest eine Anbaugerät (2)) durch eine Steuervorrichtung (21, 22, 23) des Traktors (1) und/oder des Anbaugerätes (2) gesteuert und geregelt werden, **dadurch gekennzeichnet, dass** das Fahrerassistenzsystem (3) einen kennlinienbasierend arbeitenden Hubwerkautomaten ((32) umfasst, wobei von dem Hubwerkautomaten (32) eine optimierte Einstellung von wenigstens einem Arbeitsparameter des Traktors (1) in Abhängigkeit von in der Speichereinheit (26) hinterlegten auswählbaren Regelstrategien (39) und/oder Optimierungszielgrößen (40) durchgeführt wird.

## Claims

1. A tractor (1) with at least one lifting mechanism (4), which has an upper link (5) as well as lower links (6) and these have associated actuators (7), and at least one attachment (2) adapted to the lifting mechanism (4), comprising a driver assistance system (3) optimizing the operation of at least the tractor (1) and which is provided with a computing unit (25), a memory unit (26) and at least one input interface (9, 10), wherein the computing unit (25) processes information generated by sensor systems inside the machine, external information and information stored in the memory unit (26), and wherein the tractor (1) and/or the at least one attachment (2) comprise a control device (21, 22, 23) for controlling and regulating the tractor (1) and/or the attachment (2), **characterized in that** the driver assistance system (3) comprises an automatic lifting mechanism (32), wherein the automatic lifting mechanism (32) is configured to operate on the basis of characteristic curves, and wherein the automatic lifting mechanism (32) is configured for an optimized adjustment of at least one operating parameter of the tractor (1) as a function of selectable control strategies (39) and/or optimization target variables (40) stored in the memory unit (26).

2. The tractor (1) according to claim 1, **characterized in that** the optimization of the at least one operating parameter by the automatic lifting mechanism (32) comprises taking into consideration the effect on the attachment (2) adapted to the lifting mechanism (4) as well as the reciprocal transfer of force between the tractor (1) and the attachment (2).

3. The tractor (1) according to claim 1 or claim 2, **characterized in that** the at least one operating parameter comprises at least one force or force component transmitted by the attachment (2) to the tractor (1) which acts in a horizontal and/or a vertical direction.

4. The tractor (1) according to one of claims 1 to 3, **characterized in that** the at least one operating parameter comprises at least one lifting mechanism adjustment parameter (34) from a group comprising: lifting mechanism position (35) of the upper link (5) and/or of the lower links (6), lifting mechanism force (36) of the lower links (6), length (37) of the upper link (5) and/or of the lower links (6), upper link force (38), length (68) of a lifting strut (62), lifting mechanism geometry (G).

5. The tractor (1) according to one of the preceding claims, **characterized in that** the selectable control strategy (39) comprises at least one "Efficiency" (41), "Performance" (42), "Costs" (43), "Quality" (44), "Yield" (45) strategy, or a combination of the "Efficiency" (41), "Performance" (42), "Costs" (43), "Quality" (44) and/or "Yield" (45) strategies.

6. The tractor (1) according to one of the preceding claims, **characterized in that** the optimization target variables (40) comprise at least one "Output per unit area" (46), "Consumption per unit area" (47), "Yield per unit area" (48), "Cost per unit area" (49) and/or "Work quality" (50) target variable.

7. The tractor (1) according to one of the preceding claims, **characterized in that** the control device (21, 23) of the tractor (1) together with the driver assistance system (3) forms the automatic lifting mechanism (32), in which the computing unit (25) is configured to autonomously determine parameters for implementing the respectively selected control strategy (39) and/or optimization target variable (40) and to specify those which influence the at least one operating parameter to be adjusted to the control device (21, 23) of the tractor (1).

8. The tractor (1) according to claim 7, **characterized in that** the parameters for optimized control of the at least one lifting mechanism (4) to be taken into consideration are operating parameters of the tractor (1), operating parameters of a drive train (11) of the tractor (1), operating parameters of the attachment (2) and/or environmental parameters (30, 31) resulting from environmental conditions.

9. The tractor (1) according to one of the preceding claims, **characterized in that** sensor devices (18, 19) which are configured to determine operating parameters and/or environmental parameters (30, 31) are disposed at least on the tractor (1).

10. The tractor (1) according to one of the preceding claims, **characterized in that** the lifting mechanism (6) comprises at least one actuator (7) constructed as a lifting mechanism cylinder (65) with a force measuring system (67) associated with the actuator (7).

11. The tractor (1) according to one of the preceding claims, **characterized in that** the lifting mechanism (6) comprises at least one lifting strut (62) the length of which can be changed with a force measuring system (67) associated with the lifting strut (62).

12. The tractor (1) according to one of the preceding claims, **characterized in that** the lifting mechanism (6) comprises a force measuring system (69) which is configured for the detection of forces which are introduced at receiving elements (61) for the attachment (2) disposed at an end of the lower links (6).

13. The tractor (1) according to one of the preceding claims, **characterized in that** the driver assistance system (3) is configured to receive external information (28) in order to determine operating parameters and/or environmental parameters (30, 31).

14. The tractor (1) according to one of the preceding claims, **characterized in that** a functional model of the tractor (1) and of the attachment (2) is stored in the memory unit (26) and represents at least part of the functional interrelationship of the tractor (1) and the attachment (2) adapted thereto.

15. The tractor (1) according to one of the preceding claims, **characterized in that** in order to represent the functional interrelationships of the tractor (1), at least one n-dimensional characteristic map (54) is associated with the at least one lifting mechanism adjustment parameter (34), wherein the respective lifting mechanism adjustment parameter (34) is defined as an output variable (I_{A}) of the at least one n-dimensional characteristic map (54).

16. The tractor (1) according to claim 15, **characterized in that** at least one or more operating parameters of the tractor (1), of the attachment (2) and/or environmental parameters (30, 31) resulting from the environmental conditions form the input variables (I_{E}) of the at least one n-dimensional characteristic map (54).

17. The tractor (1) according to one of claims 15 or 16, **characterized in that** the computing unit (25) matches the at least one n-dimensional characteristic map (54) during ongoing operation, in particular cyclically, with the conditions of use of the tractor (1) and of the attachment (2), preferably **in that** at least one n-dimensional initial characteristic map (54i) for the at least one lifting mechanism adjustment parameter (34) is stored in the memory unit (26), and **in that** during a first determination of the at least one lifting mechanism adjustment parameter (34), the computing unit (25) carries out the determination on the basis of the initial characteristic map (54).

18. The tractor (1) according to claim 17, **characterized in that** the computing unit (25) is configured to carry out an adaptation of the form of the initial characteristic map (54i) to the existing conditions of use by using determined operating parameters of at least the tractor (1) or by visiting sampling points in the initial characteristic map (54i).

19. The tractor (1) according to one of the preceding claims, **characterized in that** the driver assistance system (3) is constructed on the basis of a data cloud service.

20. A method for operating a tractor (1) with at least one lifting mechanism (4), which has an upper link (5) as well as lower links (6) and these have associated actuators (7), and at least one attachment (2) adapted to the lifting mechanism (4), comprising a driver assistance system (3) optimizing the operation of at least the tractor (1) and which is provided with a computing unit (25), a memory unit (26) and at least one input interface (9, 10), wherein by means of the computing unit (25), information generated by sensor systems inside the machine, external information and information stored in the memory unit (26) is processed, and wherein the tractor (1) and/or the at least one attachment (2) are controlled and regulated by a control device (21, 22, 23) of the tractor (1) and/or of the attachment (2), **characterized in that** the driver assistance system (3) comprises an automatic lifting mechanism (32) operating on the basis of characteristic curves, wherein the automatic lifting mechanism (32) carries out an optimized adjustment of at least one operating parameter of the tractor (1) as a function of selectable control strategies (39) and/or optimization target variables (40) stored in the memory unit (26).

## Revendications

1. Tracteur (1) doté d'au moins un mécanisme de relevage (4), qui présente un bras supérieur (5) ainsi que des bras inférieurs (6) et des actionneurs (7) associés à ceux-ci, et doté d'au moins un outil attelé (2) adapté au mécanisme de relevage (4), comprenant un système d'assistance au conducteur (3) qui optimise le fonctionnement au moins du tracteur (1) et dispose d'une unité de calcul (25), d'une unité de mémoire (26) et d'au moins une interface de saisie (9, 10), l'unité de calcul (25) traitant des informations générées par des systèmes de capteurs internes à la machine, des informations externes et des informations pouvant être enregistrées dans l'unité de mémoire (26), et le tracteur (1) et/ou l'outil attelé (2), au nombre d'au moins un, comprenant un dispositif de commande (21, 22, 23) destiné à la commande et à la régulation du tracteur (1) et/ou de l'outil attelé (2), **caractérisé en ce que** le système d'assistance au conducteur (3) comprend un automate de mécanisme de relevage (32), l'automate de mécanisme de relevage (32) étant conçu pour travailler sur la base de courbes caractéristiques, et l'automate de mécanisme de relevage (32) étant conçu pour un réglage optimisé d'au moins un paramètre de travail du tracteur (1) en fonction de stratégies de réglage (39) et/ou de valeurs cibles d'optimisation (40) qui sont enregistrées dans l'unité de mémoire (26) et peuvent être sélectionnées.

2. Tracteur (1) selon la revendication 1, **caractérisé en ce que** l'optimisation du paramètre de travail, au nombre d'au moins un, par l'automate de mécanisme de relevage (32) comprend la prise en compte des effets pour l'outil attelé (2) adapté au mécanisme de relevage (4), ainsi que la transmission de force réciproque entre le tracteur (1) et l'outil attelé (2).

3. Tracteur (1) selon la revendication 1 ou 2, **caractérisé en ce que** le paramètre de travail, au nombre d'au moins un, comprend au moins une force ou une composante de force résultante, qui sont transmises de l'outil attelé (2) au tracteur (1) et agissent dans la direction horizontale et/ou verticale.

4. Tracteur (1) selon une des revendications 1 à 3, **caractérisé en ce que** le paramètre de travail, au nombre d'au moins un, est au moins un paramètre de réglage du mécanisme de relevage (34) d'un groupe comprenant la position du mécanisme de relevage (35) du bras supérieur (5) et/ou des bras inférieurs (6), la force du mécanisme de relevage (36) des bras inférieurs (6), la longueur (37) du bras supérieur (5) et/ou des bras inférieurs (6), la force du bras supérieur (38), la longueur (68) d'une chandelle de relevage (62), la géométrie du mécanisme de relevage (G).

5. Tracteur (1) selon une des revendications précédentes, **caractérisé en ce que** la stratégie de réglage (39) sélectionnable comprend au moins une stratégie « efficacité » (41), « puissance » (42), « coûts » (43), « qualité » (44), « rendement » (45) ou une combinaison des stratégies « efficacité » (41), « puissance » (42), « coûts » (43), « qualité » (44) et/ou « rendement » (45).

6. Tracteur (1) selon une des revendications précédentes, **caractérisé en ce que** les valeurs cibles d'optimisation (40) comprennent au moins une valeur cible « surface traitée par unité de temps » (46), « consommation par surface » (47), « rendement par surface » (48), « coûts par surface » (49) et/ou « qualité de travail » (50).

7. Tracteur (1) selon une des revendications précédentes, **caractérisé en ce que** le dispositif de commande (21, 23) du tracteur (1) constitue l'automate de mécanisme de relevage (32), conjointement avec le système d'assistance au conducteur (3), par le fait que l'unité de calcul (25) est conçue pour déterminer de façon autonome des paramètres pour la mise en œuvre de la stratégie de réglage (39) et/ou de la valeur cible d'optimisation (40) respective sélectionnée et les transmettre au dispositif de commande (21, 23) du tracteur (1), paramètres qui agissent sur le paramètre de travail, au nombre d'au moins un, devant être réglé.

8. Tracteur (1) selon la revendication 7, **caractérisé en ce que** les paramètres devant être pris en compte pour l'activation optimisée du mécanisme de relevage (4), au nombre d'au moins un, sont des paramètres de travail du tracteur (1), des paramètres de travail d'une chaîne cinématique (11) du tracteur (1), des paramètres de travail de l'outil attelé (2) et/ou des paramètres d'environnement (30, 31) résultant de conditions ambiantes.

9. Tracteur (1) selon une des revendications précédentes, **caractérisé en ce que** des dispositifs à capteur (18, 19) sont prévus au moins sur le tracteur (1) et sont destinés à déterminer des paramètres de travail et/ou des paramètres d'environnement (30, 31).

10. Tracteur (1) selon une des revendications précédentes, **caractérisé en ce que** le mécanisme de relevage (6) comprend au moins un actionneur (7) réalisé sous forme de vérin de mécanisme de relevage (65), avec un système de mesure de force (67) associé à l'actionneur (7).

11. Tracteur (1) selon une des revendications précédentes, **caractérisé en ce que** le mécanisme de relevage (6) comprend au moins une chandelle de relevage (62) de longueur variable, avec un système de mesure de force (67) associé à la chandelle de relevage (62).

12. Tracteur (1) selon une des revendications précédentes, **caractérisé en ce que** le mécanisme de relevage (6) comprend un système de mesure de force (69) qui est conçu pour mesurer des forces qui sont appliquées à des éléments d'accueil (61) pour l'outil attelé (2), qui sont disposés côté extrémités des bras inférieurs (6).

13. Tracteur (1) selon une des revendications précédentes, **caractérisé en ce que** le système d'assistance au conducteur (3) est conçu pour la réception d'informations externes (28), aux fins de déterminer des paramètres de travail et/ou des paramètres d'environnement (30, 31).

14. Tracteur (1) selon une des revendications précédentes, **caractérisé en ce qu'**un modèle fonctionnel du tracteur (1) et de l'outil attelé (2) est enregistré dans l'unité de mémoire (26), lequel modèle reproduit au moins une partie des liens fonctionnels du tracteur (1) et de l'outil attelé (2) adapté à celui-ci.

15. Tracteur (1) selon une des revendications précédentes, **caractérisé en ce que** pour la reproduction des liens fonctionnels du tracteur (1), au moins un diagramme caractéristique (54) à n dimensions est associé au paramètre de mécanisme de relevage (34), au nombre d'au moins un, le paramètre de mécanisme de relevage (34) respectif étant défini comme grandeur de sortie (I_{A}) du diagramme caractéristique (54) à n dimensions, au nombre d'au moins un.

16. Tracteur (1) selon la revendication 15, **caractérisé en ce qu'**au moins un ou plusieurs paramètres de travail du tracteur (1), de l'outil attelé (2) et/ou des paramètres d'environnement (30, 31) résultant des conditions ambiantes constituent la grandeur d'entrée (I_{ε}) du diagramme caractéristique (54) à n dimensions, au nombre d'au moins un.

17. Tracteur (1) selon une des revendications 15 ou 16, **caractérisé en ce que** l'unité de calcul (25) compare, au cours du fonctionnement, notamment de manière cyclique, le diagramme caractéristique (54) à n dimensions, au nombre d'au moins un, avec les conditions d'utilisation du tracteur (1) et de l'outil attelé (2), de préférence **en ce qu'**au moins un diagramme caractéristique initial (54) à n dimensions est enregistré dans l'unité de mémoire (26) pour le paramètre de réglage du mécanisme de relevage (34), au nombre d'au moins un, et **en ce que** lors d'une première détermination du paramètre de réglage du mécanisme de relevage (34), au nombre d'au moins un, l'unité de calcul (25) procède à la détermination sur la base du diagramme caractéristique initial (54).

18. Tracteur (1) selon la revendication 17, **caractérisé en ce que** l'unité de calcul (25) est conçue pour réaliser une adaptation de la formation du diagramme caractéristique initial (54) à des conditions de service existantes, en utilisant des paramètres de travail définis, au moins du tracteur (1), ou en sélectionnant des points nodaux dans le diagramme caractéristique initial (54).

19. Tracteur (1) selon une des revendications précédentes, **caractérisé en ce que** le système d'assistance au conducteur (3) est réalisé sur la base d'un service de données en nuage.

20. Procédé de fonctionnement d'un tracteur (1) doté d'au moins un mécanisme de relevage (4) qui présente un bras supérieur (5) ainsi que des bras inférieurs (6) et des actionneurs (7) associés à ceux-ci, et doté d'au moins un outil attelé (2) adapté au mécanisme de relevage (4), comprenant un système d'assistance au conducteur (3) qui optimise le fonctionnement au moins du tracteur (1) et qui dispose d'une unité de calcul (25), d'une unité de mémoire (26) et d'au moins une interface de saisie (9, 10), l'unité de calcul (25) traitant des informations générées par des systèmes de capteurs internes à la machine, des informations externes et des informations pouvant être enregistrées dans l'unité de mémoire (26), et le tracteur (1) et/ou l'outil attelé (2), au nombre d'au moins un, étant commandés et régulés par un dispositif de commande (21, 22, 23) du tracteur (1) et/ou de l'outil attelé (2), **caractérisé en ce que** le système d'assistance au conducteur (3) comprend un automate de mécanisme de relevage (32) travaillant sur la base de courbes caractéristiques, l'automate de mécanisme de relevage (32) effectuant un réglage optimisé d'au moins un paramètre de travail du tracteur (1) en fonction de stratégies de réglage (39) et/ou de valeurs cibles d'optimisation (40) qui sont enregistrées dans l'unité de mémoire (26) et peuvent être sélectionnées.
